(19) Europäisches Patentamt
European Patent Office
Office européen des brevets

(11) **EP 4 583 003 A1**

(12) **EUROPEAN PATENT APPLICATION**

(43) Date of publication:
**09.07.2025 Bulletin 2025/28**

(21) Application number: **24218598.1**

(22) Date of filing: **10.12.2024**

(51) International Patent Classification (IPC):
**G06N 3/045** (2023.01)   **G06N 20/20** (2019.01)
**G06F 8/30** (2018.01)   G06N 3/088 (2023.01)

(52) Cooperative Patent Classification (CPC):
**G06N 3/045; G06F 8/30; G06N 20/20;** G06F 8/35;
G06F 8/36; G06N 3/088; G06N 3/0895; G06N 3/09;
G06N 3/092

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.01.2024   US 202463617943 P**
**08.10.2024   US 202418909413**

(71) Applicant: **Optum, Inc.**
**Minnetonka, Minnesota 55343 (US)**

(72) Inventors:
• **MOHANTY, Somya D.**
**Greensboro, NC (US)**
• **SWAN, Ryan Michael**
**Santa Monica, CA (US)**
• **SRIVASTAVA, Abhishek**
**Pittsburgh, PA (US)**

(74) Representative: **Zacco Sweden AB**
**P.O. Box 5581**
**Löjtnantsgatan 21**
**114 85 Stockholm (SE)**

(54) **SCALABLE MACHINE LEARNING FRAMEWORK FOR AUTONOMOUS CODING IN COMPLEX PREDICTION SPACES**

(57)    Various embodiments of the present disclosure provide machine learning architectures and training techniques for improving predictive functionality of a computer. The techniques apply a multi-layered machine learning model to a target prediction domain to generate a model prediction for an input data object. The techniques may include inputting a vector to layer models of the multi-layered machine learning model to generate a layer code predictions for a code defined within a target coding domain. The techniques include inputting the layer code predictions to a layer metamodels of the multi-layered machine learning model to generate intermediate code predictions for the code. The techniques include inputting intermediate outputs to a fusion model of the multi-layered machine learning model to generate a fused code prediction for the code and outputting a model prediction for the code based on the fused code prediction.

FIG. 1

EP 4 583 003 A1

## Description

## TECHNICAL FIELD

Various embodiments of the present disclosure relate to methods, systems and computer-readable storage media for improving predictive functionality of a computer. In particular, but not exclusively, the present disclosure relates to machine learning architectures and training techniques for improving predictive functionality of a computer.

## BACKGROUND

Various embodiments of the present disclosure address technical challenges related to machine learning technology, including modeling techniques for autonomous coding within complex prediction spaces. Traditional autonomous coding techniques may leverage rule-based models and/or machine learning models to identify codes within an input. Rule-based models traditionally outperform their machine learning model counterparts but are rigid, impractical for use in large prediction spaces due to a lack of scalability and rely on static rule definitions that are derived from observable data that may be unavailable for codes within a prediction space. Machine learning models are scalable to most codes within large prediction spaces. However, their performance is tied to the training data leading the underperformance of machine learning model with respect codes that appear less frequently within a prediction space (e.g., rare codes lead to insufficient training data).

Regardless of the techniques used, the accuracy, complexity, and maintenance requirements of the techniques are negatively impacted as number of codes and the nuances between the interconnectivity of the number of codes increases within a prediction space. For example, the accuracy of traditional models typically decreases as a function of the number of codes considered by the model and the amount of training data available for each of the considered codes. Transfer learning techniques may be applied to improve machine learning performance by leveraging the interconnectivity between several codes. However, such techniques may negatively impact predictions for codes with robust training data, such that they are outperformed by individual models. These deficiencies, among others, prevent the use of only machine learning for autonomous coding within complex prediction spaces.

Various embodiments of the present disclosure make important contributions to traditional optimization technologies by addressing these technical challenges, among others.

## BRIEF SUMMARY

Various embodiments of the present disclosure provide model architecture and training techniques that improve the functionality of a computer through machine learning processes that address the technical challenges discussed herein. A machine learning architecture of the present disclosure may provide a multi-layered machine learning model designed to share information across multiple, hierarchical levels of predictions. In some example, the models within each of the hierarchical levels may increase in generality and decease in accuracy at each subsequent level of the architecture. To improve upon traditional model ensembles, the model architecture defines a plurality of residual connections that enable a one-way information transfer from deeper models (i.e., located in first hierarchical layers) forward to shallower models (e.g., a second, third, etc. hierarchical layer) within the architecture to improve the performance of generalized models without decreasing the performance of specific models. In some examples, at each hierarchical layer, the architecture may include a metamodel configured to aggregate predictions from a model ensemble. This allows the architecture to facilitate both probabilistic and deterministic model outputs, providing a comprehensive, nuanced, and adaptive data processing approach to various computer functions, such as autonomous coding. The hierarchical layers may terminate at a fusion model that leverages an improved Mixture of Experts (MoE) approach to synthesize model outputs from a plurality of components models and metamodels that each specialize in a particular modality and/or portion of a prediction space. Each of the component models may be trained individually and jointly through a multi-stage training techniques. By doing so, the model architecture and training techniques of the present disclosure may improve accuracy and efficiency of complex predictions, such as those in an automated coding space for complex target coding domains.

In some embodiments, a computer-implemented method includes inputting, by one or more processors, an input feature vector to a first layer model of a multi-layered machine learning model to generate a first layer code prediction for a code of a plurality of codes defined within a target coding domain; inputting, by the one or more processors, the first layer code prediction to a first layer metamodel of the multi-layered machine learning model to generate a first intermediate code prediction for the code; inputting, by the one or more processors, the input feature vector to a second layer model of the multi-layered machine learning model to generate a second layer code prediction for the code; inputting, by the one or more processors, (a) the first layer code prediction, (b) the second layer code prediction, and (c) the first intermediate code prediction to second layer metamodel of the multi-layered machine learning model to generate a second intermediate code prediction for the code; inputting, by the one or more processors, a plurality of intermediate outputs comprising (a) the first intermediate code prediction, (b) the second intermediate code prediction, (c) a first code-level performance metric score identifying a first accuracy of the first layer model with respect to the code, and (d) a second code-level performance metric score identifying a second accuracy of the second layer model with respect to the code, to a fusion model of the multi-layered machine learning model to generate a fused code prediction for the code; and outputting, by the one or more processors, a model prediction for the code based on the fused code prediction.

In some embodiments, a system includes memory and one or more processors communicatively coupled to the memory, the one or more processors are configured to input an input feature vector to a first layer model of a multi-layered machine learning model to generate a first layer code prediction for a code of a plurality of codes defined within a target coding domain; input the first layer code prediction to a first layer metamodel of the multi-layered machine learning model to generate a first intermediate code prediction for the code; input the input feature vector to a second layer model of the multi-layered machine learning model to generate a second layer code prediction for the code; input (a) the first layer code prediction, (b) the second layer code prediction, and (c) the first intermediate code prediction to second layer metamodel of the multi-layered machine learning model to generate a second intermediate code prediction for the code; input a plurality of intermediate outputs comprising (a) the first intermediate code prediction, (b) the second intermediate code prediction, (c) a first code-level performance metric score identifying a first accuracy of the first layer model with respect to the code, and (d) a second code-level performance metric score identifying a second accuracy of the second layer model with respect to the code, to a fusion model of the multi-layered machine learning model to generate a fused code prediction for the code; and output a model prediction for the code based on the fused code prediction.

In some embodiments, one or more non-transitory computer-readable storage media include instructions that, when executed by one or more processors, cause the one or more processors to input an input feature vector to a first layer model of a multi-layered machine learning model to generate a first layer code prediction for a code of a plurality of codes defined within a target coding domain; input the first layer code prediction to a first layer metamodel of the multi-layered machine learning model to generate a first intermediate code prediction for the code; input the input feature vector to a second layer model of the multi-layered machine learning model to generate a second layer code prediction for the code; input (a) the first layer code prediction, (b) the second layer code prediction, and (c) the first intermediate code prediction to second layer metamodel of the multi-layered machine learning model to generate a second intermediate code prediction for the code; input a plurality of intermediate outputs comprising (a) the first intermediate code prediction, (b) the second intermediate code prediction, (c) a first code-level performance metric score identifying a first accuracy of the first layer model with respect to the code, and (d) a second code-level performance metric score identifying a second accuracy of the second layer model with respect to the code, to a fusion model of the multi-layered machine learning model to generate a fused code prediction for the code; and output a model prediction for the code based on the fused code prediction.

## BRIEF DESCRIPTION OF THE DRAWINGS

FIG. 1 provides an example overview of an architecture in accordance with some embodiments of the present disclosure.

FIG. 2 provides an example predictive data analysis computing entity in accordance with some embodiments of the present disclosure.

FIG. 3 provides an example client computing entity in accordance with some embodiments of the present disclosure.

FIG. 4 is an operational example of a multi-layered autonomous coding framework in accordance with some embodiments of the present disclosure.

FIG. 5 is an operational example of a hierarchical framework for a multi-layered machine learning model in accordance with some embodiments of the present disclosure.

FIG. 6 is an operational example of a staged training technique in accordance with some embodiments of the present disclosure.

FIG. 7 is a flowchart diagram of an example process for implementing a multi-layered autonomous coding framework in accordance with some embodiments of the present disclosure.

## DETAILED DESCRIPTION

Various embodiments of the present disclosure are described more fully hereinafter with reference to the accompanying drawings, in which some, but not all embodiments of the present disclosure are shown. Indeed, the present disclosure may be embodied in many different forms and should not be construed as limited to the embodiments set forth herein; rather, these embodiments are provided so that this disclosure will satisfy applicable legal requirements. The term "or" is used herein in both the alternative and conjunctive sense, unless otherwise indicated. The terms "illustrative" and "example" are used to be examples with no indication of quality level. Terms such as "computing," "determining," "generating," and/or similar words are used herein interchangeably to refer to the creation, modification, or identification of data. Further, "based on," "based at least in part on," "based at least on," "based upon," and/or similar words are used herein interchangeably in an open-ended manner such that they do not necessarily indicate being based only on or based solely on the referenced element or elements unless so indicated. Like numbers refer to like elements throughout.

**I. Computer Program Products, Methods, and Computing Entities**

Embodiments of the present disclosure may be implemented in various ways, including as computer program products that comprise articles of manufacture. Such computer program products may include one or more software components including, for example, software objects, methods, data structures, or the like. A software component may be coded in any of a variety of programming languages. An illustrative programming language may be a lower-level programming language such as an assembly language associated with a particular hardware architecture and/or operating system platform. A software component comprising assembly language instructions may require conversion into executable machine code by an assembler prior to execution by the hardware architecture and/or platform. Another example programming language may be a higher-level programming language that may be portable across multiple architectures. A software component comprising higher-level programming language instructions may require conversion to an intermediate representation by an interpreter or a compiler prior to execution.

Other examples of programming languages include, but are not limited to, a macro language, a shell or command language, a job control language, a script language, a database query or search language, and/or a report writing language. In one or more example embodiments, a software component comprising instructions in one of the foregoing examples of programming languages may be executed directly by an operating system or other software component without having to be first transformed into another form. A software component may be stored as a file or other data storage construct. Software components of a similar type or functionally related may be stored together such as, for example, in a particular directory, folder, or library. Software components may be static (e.g., pre-established, or fixed) or dynamic (e.g., created or modified at the time of execution).

A computer program product may include a non-transitory computer-readable storage medium storing applications, programs, program modules, scripts, source code, program code, object code, byte code, compiled code, interpreted code, machine code, executable instructions, and/or the like (also referred to herein as executable instructions, instructions for execution, computer program products, program code, and/or similar terms used herein interchangeably). Such non-transitory computer-readable storage media include all computer-readable media (including volatile and non-volatile media).

A non-volatile computer-readable storage medium may include a floppy disk, flexible disk, hard disk, solid-state storage (SSS) (e.g., a solid-state drive (SSD), solid-state card (SSC), solid-state module (SSM)), enterprise flash drive, magnetic tape, or any other non-transitory magnetic medium, and/or the like. A non-volatile computer-readable storage medium may also include a punch card, paper tape, optical mark sheet (or any other physical medium with patterns of holes or other optically recognizable indicia), compact disc read only memory (CD-ROM), compact disc-rewritable (CD-RW), digital versatile disc (DVD), Blu-ray disc (BD), any other non-transitory optical medium, and/or the like. Such a non-volatile computer-readable storage medium may also include read-only memory (ROM), programmable read-only memory (PROM), erasable programmable read-only memory (EPROM), electrically erasable programmable read-only memory (EEPROM), flash memory (e.g., Serial, NAND, NOR, and/or the like), multimedia memory cards (MMC), secure digital (SD) memory cards, SmartMedia cards, CompactFlash (CF) cards, Memory Sticks, and/or the like. Further, a non-volatile computer-readable storage medium may also include conductive-bridging random access memory (CBRAM), phase-change random access memory (PRAM), ferroelectric random-access memory (FeRAM), non-volatile random-access memory (NVRAM), magnetoresistive random-access memory (MRAM), resistive random-access memory (RRAM), Silicon-Oxide-Nitride-Oxide-Silicon memory (SONOS), floating junction gate random access memory (FJG RAM), Millipede memory, racetrack memory, and/or the like.

A volatile computer-readable storage medium may include random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory module (RIMM), dual in-line memory module (DIMM), single in-line memory module (SIMM), video random access memory (VRAM), cache memory (including various levels), flash memory, register memory, and/or the like. It will be appreciated that where embodiments are described to use a computer-readable storage medium, other types of computer-readable storage media may be substituted for or used in addition to the computer-readable storage media described above.

As should be appreciated, various embodiments of the present disclosure may also be implemented as methods, apparatus, systems, computing devices, computing entities, and/or the like. As such, embodiments of the present disclosure may take the form of an apparatus, system, computing device, computing entity, and/or the like executing instructions stored on a computer-readable storage medium to perform certain steps or operations. Thus, embodiments of the present disclosure may also take the form of an entirely hardware embodiment, an entirely computer program product embodiment, and/or an embodiment that comprises a combination of computer program products and hardware performing certain steps or operations.

Embodiments of the present disclosure are described below with reference to block diagrams and flowchart illustrations. Thus, it should be understood that each block of the block diagrams and flowchart illustrations may be implemented in the form of a computer program product, an entirely hardware embodiment, a combination of hardware and computer program products, and/or apparatus, systems, computing devices, computing entities, and/or the like carrying out instructions, operations, steps, and similar words used interchangeably (e.g., the executable instructions, instructions for execution, program code, and/or the like) on a computer-readable storage medium for execution. For example, retrieval, loading, and execution of code may be performed sequentially such that one instruction is retrieved, loaded, and executed at a time. In some example embodiments, retrieval, loading, and/or execution may be performed in parallel such that multiple instructions are retrieved, loaded, and/or executed together. Thus, such embodiments may produce specifically configured machines performing the steps or operations specified in the block diagrams and flowchart illustrations. Accordingly, the block diagrams and flowchart illustrations support various combinations of embodiments for performing the specified instructions, operations, or steps.

## II. Example Framework

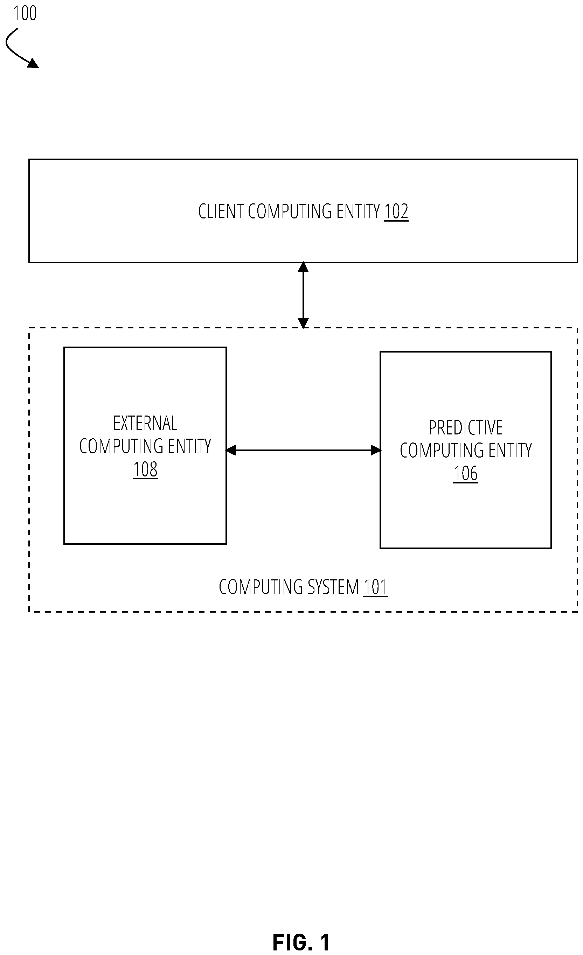

FIG. 1 provides an example overview of an architecture 100 in accordance with some embodiments of the present disclosure. The architecture 100 includes a computing system 101 configured to receive requests, such as autonomous coding requests, from client computing entities 102, process the requests to generate model outputs, and provide the model outputs to the client computing entities 102. The example architecture 100 may be used in a plurality of domains and not limited to any specific application as disclosed herewith. The plurality of domains may include healthcare, industrial, manufacturing, computer security, to name a few.

In accordance with various embodiments of the present disclosure, one or more machine learning models may be trained to generate model outputs, and/or one or more intermediary outputs (e.g., layer prediction, intermediate predictions, fused predictions, etc.). The models may form a machine learning ensemble model that may be configured to autonomously code an input data object with respect to a target coding domain. Some techniques of the present disclosure may adapt traditional models to a cohesive framework for more efficiently handling autonomous coding processes.

In some embodiments, the computing system 101 may communicate with at least one of the client computing entities 102 using one or more communication networks. Examples of communication networks include any wired or wireless communication network including, for example, a wired or wireless local area network (LAN), personal area network (PAN), metropolitan area network (MAN), wide area network (WAN), or the like, as well as any hardware, software, and/or firmware required to implement it (such as, e.g., network routers, and/or the like).

The computing system 101 may include a predictive computing entity 106 and one or more external computing entities 108. The predictive computing entity 106 and/or one or more external computing entities 108 may be individually and/or collectively configured to receive requests from client computing entities 102, process the requests to generate a model outputs, and provide the model outputs to the client computing entities 102.

For example, as discussed in further detail herein, the predictive computing entity 106 and/or one or more external computing entities 108 comprise storage subsystems that may be configured to store input data, training data, and/or the like that may be used by the respective computing entities to perform predictive data analysis and/or training operations of the present disclosure. In addition, the storage subsystems may be configured to store model definition data used by the respective computing entities to perform various predictive data analysis and/or training tasks. The storage subsystem may include one or more storage units, such as multiple distributed storage units that are connected through a computer network. Each storage unit in the respective computing entities may store at least one of one or more data assets and/or one or more data about the computed properties of one or more data assets. Moreover, each storage unit in the storage systems may include one or more non-volatile storage or memory media including, but not limited to, hard disks, ROM, PROM, EPROM, EEPROM, flash memory, MMCs, SD memory cards, Memory Sticks, CBRAM, PRAM, FeRAM, NVRAM, MRAM, RRAM, SONOS, FJG RAM, Millipede memory, racetrack memory, and/or the like.

In some embodiments, the predictive computing entity 106 and/or one or more external computing entities 108 are communicatively coupled using one or more wired and/or wireless communication techniques.

The respective computing entities may be specially configured to perform one or more steps/operations of one or more techniques described herein. By way of example, the predictive computing entity 106 may be configured to train, implement, use, update, and evaluate machine learning models in accordance with one or more training and/or inference operations of the present disclosure. In some examples, the external computing entities 108 may be configured to train, implement, use, update, and evaluate machine learning models in accordance with one or more training and/or inference operations of the present disclosure.

In some example embodiments, the predictive computing entity 106 may be configured to receive and/or transmit one or more datasets, objects, and/or the like from and/or to the external computing entities 108 to perform one or more steps/operations of one or more techniques (e.g., prediction techniques, coding techniques, and/or the like) described herein. The external computing entities 108, for example, may include and/or be associated with one or more entities that may be configured to receive, transmit, store, manage, and/or facilitate datasets, such as a training datasets, and/or the like. The external computing entities 108, for example, may include data sources that may provide such datasets, and/or the like to the predictive computing entity 106 which may leverage the datasets to perform one or more steps/operations of the present disclosure, as described herein. In some examples, the datasets may include an aggregation of data from across a plurality of external computing entities 108 into one or more aggregated datasets. The external computing entities 108, for example, may be associated with one or more data repositories, cloud platforms, compute nodes, organizations, and/or the like, which may be individually and/or collectively leveraged by the predictive computing entity 106 to obtain and aggregate data for a target coding domain.

In some example embodiments, the predictive computing entity 106 may be configured to receive a trained machine learning model trained and subsequently provided by the one or more external computing entities 108. For example, the one or more external computing entities 108 may be configured to perform one or more training steps/operations of the present disclosure to train a machine learning model, as described herein. In such a case, the trained machine learning model may be provided to the predictive computing entity 106, which may leverage the trained machine learning model to perform one or more inference steps/operations of the present disclosure. In some examples, feedback (e.g., evaluation data, ground truth data, etc.) from the use of the machine learning model may be recorded by the predictive computing entity 106. In some examples, the feedback may be provided to the one or more external computing entities 108 to continuously train the machine learning model over time. In some examples, the feedback may be leveraged by the predictive computing entity 106 to continuously train the machine learning model over time. In this manner, the computing system 101 may perform, via one or more combinations of computing entities, one or more prediction, training, and/or any other machine learning-based techniques of the present disclosure.

## A. *Example Predictive Computing Entity*

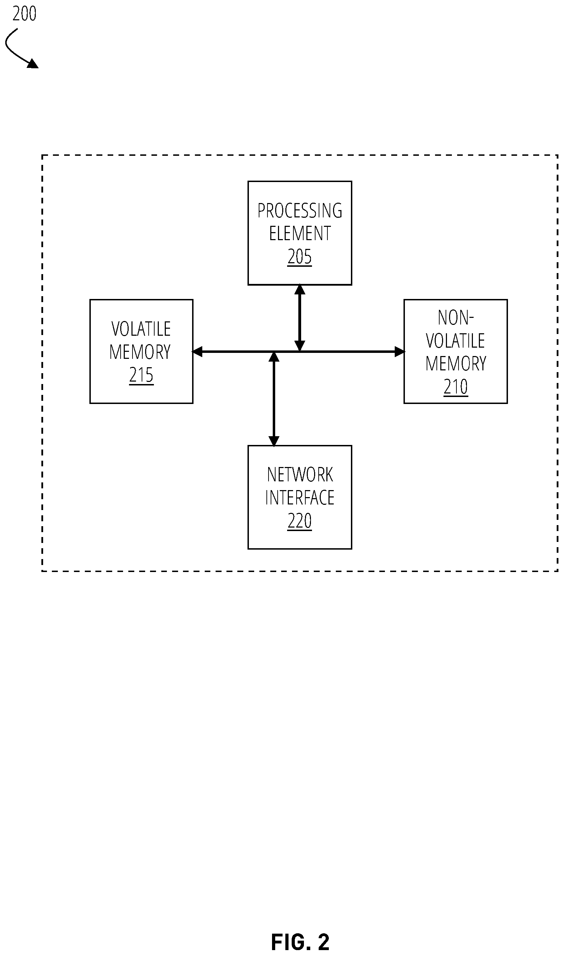

FIG. 2 provides an example computing entity 200 in accordance with some embodiments of the present disclosure. The computing entity 200 is an example of the predictive computing entity 106 and/or external computing entities 108 of FIG. 1. In general, the terms computing entity, computer, entity, device, system, and/or similar words used herein interchangeably may refer to, for example, one or more computers, computing entities, desktops, mobile phones, tablets, phablets, notebooks, laptops, distributed systems, kiosks, input terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, processing, displaying, storing, determining, creating/generating, training one or more machine learning models, monitoring, evaluating, comparing, and/or similar terms used herein interchangeably. In some embodiments, these functions, operations, and/or processes may be performed on data, content, information, and/or similar terms used herein interchangeably. In some embodiments, the one computing entity (e.g., predictive computing entity 106, etc.) may train and use one or more machine learning models described herein. In other embodiments, a first computing entity (e.g., predictive computing entity 106, etc.) may use one or more machine learning models that may be trained by a second computing entity (e.g., external computing entity 108) communicatively coupled to the first computing entity. The second computing entity, for example, may train one or more of the machine learning models described herein, and subsequently provide the trained machine learning model(s) (e.g., optimized weights, code sets, etc.) to the first computing entity over a network.

As shown in FIG. 2, in some embodiments, the computing entity 200 may include, or be in communication with, one or more processing elements 205 (also referred to as processors, processing circuitry, and/or similar terms used herein interchangeably) that communicate with other elements within the computing entity 200 via a bus, for example. As will be understood, the processing element 205 may be embodied in a number of different ways.

For example, the processing element 205 may be embodied as one or more complex programmable logic devices (CPLDs), microprocessors, multi-core processors, coprocessing entities, application-specific instruction-set processors (ASIPs), microcontrollers, and/or controllers. Further, the processing element 205 may be embodied as one or more other processing devices or circuitry. The term circuitry may refer to an entirely hardware embodiment or a combination of hardware and computer program products. Thus, the processing element 205 may be embodied as integrated circuits, application specific integrated circuits (ASICs), field programmable gate arrays (FPGAs), programmable logic arrays (PLAs), hardware accelerators, other circuitry, and/or the like.

As will therefore be understood, the processing element 205 may be configured for a particular use or configured to execute instructions stored in volatile or non-volatile media or otherwise accessible to the processing element 205. As such, whether configured by hardware or computer program products, or by a combination thereof, the processing element 205 may be capable of performing steps or operations according to embodiments of the present disclosure when configured accordingly.

In some embodiments, the computing entity 200 may further include, or be in communication with, non-volatile media (also referred to as non-volatile storage, memory, memory storage, memory circuitry, and/or similar terms used herein interchangeably). In some embodiments, the non-volatile media may include one or more non-volatile memory 210, including, but not limited to, hard disks, ROM, PROM, EPROM, EEPROM, flash memory, MMCs, SD memory cards, Memory Sticks, CBRAM, PRAM, FeRAM, NVRAM, MRAM, RRAM, SONOS, FJG RAM, Millipede memory, racetrack memory, and/or the like.

As will be recognized, the non-volatile media may store databases, database instances, database management systems, data, applications, programs, program modules, scripts, code (e.g., source code, object code, byte code, compiled code, interpreted code, machine code, etc.) that embodies one or more machine learning models or other computer functions described herein, executable instructions, and/or the like. The term database, database instance, database management system, and/or similar terms used herein interchangeably, may refer to a collection of records or data that is stored in a computer-readable storage medium using one or more database models; such as a hierarchical database model, network model, relational model, entity-relationship model, object model, document model, semantic model, graph model, and/or the like.

In some embodiments, the computing entity 200 may further include, or be in communication with, volatile media (also referred to as volatile storage, memory, memory storage, memory circuitry, and/or similar terms used herein interchangeably). In some embodiments, the volatile media may also include one or more volatile memory 215, including, but not limited to, RAM, DRAM, SRAM, FPM DRAM, EDO DRAM, SDRAM, DDR SDRAM, DDR2 SDRAM, DDR3 SDRAM, RDRAM, TTRAM, T-RAM, Z-RAM, RIMM, DIMM, SIMM, VRAM, cache memory, register memory, and/or the like.

As will be recognized, the volatile storage or memory media may be used to store at least portions of the databases, database instances, database management systems, data, applications, programs, program modules, code (source code, object code, byte code, compiled code, interpreted code, machine code) that embodies one or more machine learning models or other computer functions described herein, executable instructions, and/or the like being executed by, for example, the processing element 205. Thus, the databases, database instances, database management systems, data, applications, programs, program modules, code (source code, object code, byte code, compiled code, interpreted code, machine code) that embodies one or more machine learning models or other computer functions described herein, executable instructions, and/or the like may be used to control certain aspects of the operation of the computing entity 200 with the assistance of the processing element 205 and operating system.

As indicated, in some embodiments, the computing entity 200 may also include one or more network interfaces 220 for communicating with various computing entities (e.g., the client computing entity 102, external computing entities, etc.), such as by communicating data, code, content, information, and/or similar terms used herein interchangeably that may be transmitted, received, operated on, processed, displayed, stored, and/or the like. Such communication may be executed using a wired data transmission protocol, such as fiber distributed data interface (FDDI), digital subscriber line (DSL), Ethernet, asynchronous transfer mode (ATM), frame relay, data over cable service interface specification (DOCSIS), or any other wired transmission protocol. In some embodiments, the computing entity 200 communicates with another computing entity for uploading or downloading data or code (e.g., data or code that embodies or is otherwise associated with one or more machine learning models). Similarly, the computing entity 200 may be configured to communicate via wireless external communication networks using any of a variety of protocols, such as general packet radio service (GPRS), Universal Mobile Telecommunications System (UMTS), Code Division Multiple Access 2000 (CDMA2000), CDMA2000 1X (1xRTT), Wideband Code Division Multiple Access (WCDMA), Global System for Mobile Communications (GSM), Enhanced Data rates for GSM Evolution (EDGE), Time Division-Synchronous Code Division Multiple Access (TD-SCDMA), Long Term Evolution (LTE), Evolved Universal Terrestrial Radio Access Network (E-UTRAN), Evolution-Data Optimized (EVDO), High Speed Packet Access (HSPA), High-Speed Downlink Packet Access (HSDPA), IEEE 802.11 (Wi-Fi), Wi-Fi Direct, 802.16 (WiMAX), ultra-wideband (UWB), infrared (IR) protocols, near field communication (NFC) protocols, Wibree, Bluetooth protocols, wireless universal serial bus (USB) protocols, and/or any other wireless protocol.

Although not shown, the computing entity 200 may include, or be in communication with, one or more input elements, such as a keyboard input, a mouse input, a touch screen/display input, motion input, movement input, audio input, pointing device input, joystick input, keypad input, and/or the like. The computing entity 200 may also include, or be in communication with, one or more output elements (not shown), such as audio output, video output, screen/display output, motion output, movement output, and/or the like.

### B. *Example Client Computing Entity*

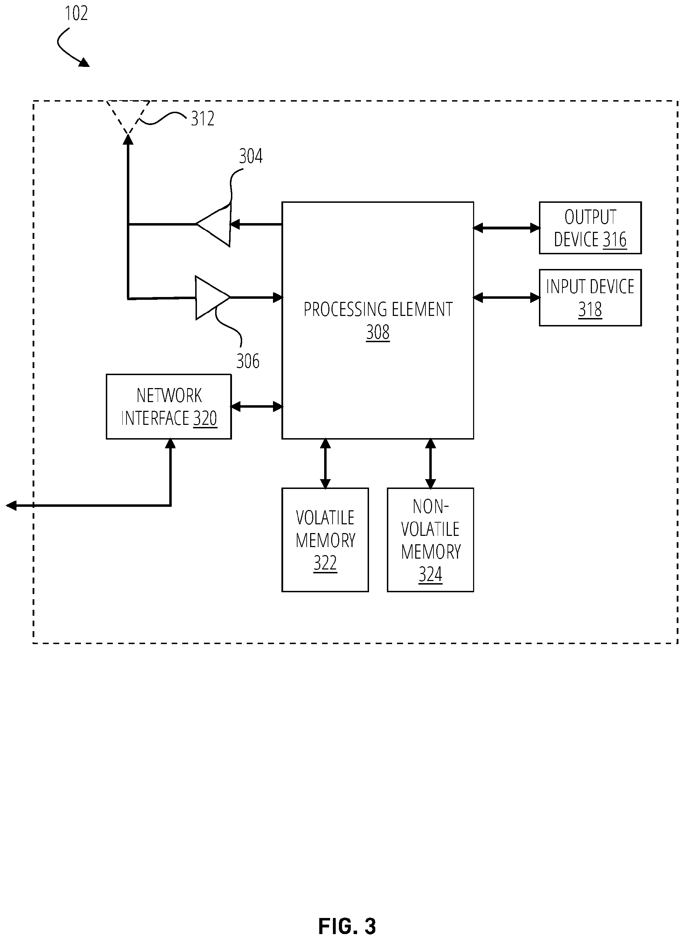

FIG. 3 provides an example client computing entity in accordance with some embodiments of the present disclosure. In general, the terms device, system, computing entity, entity, and/or similar words used herein interchangeably may refer to, for example, one or more computers, computing entities, desktops, mobile phones, tablets, phablets, notebooks, laptops, distributed systems, kiosks, input terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Client computing entities 102 may be operated by various parties. As shown in FIG. 3, the client computing entity 102 may include an antenna 312, a transmitter 304 (e.g., radio), a receiver 306 (e.g., radio), and a processing element 308 (e.g., CPLDs, microprocessors, multi-core processors, coprocessing entities, ASIPs, microcontrollers, and/or controllers) that provides signals to and receives signals from the transmitter 304 and receiver 306, correspondingly.

The signals provided to and received from the transmitter 304 and the receiver 306, correspondingly, may include signaling information/data in accordance with air interface standards of applicable wireless systems. In this regard, the client computing entity 102 may be capable of operating with one or more air interface standards, communication protocols, modulation types, and access types. More particularly, the client computing entity 102 may operate in accordance with any of a number of wireless communication standards and protocols, such as those described above with regard to the computing entity 200. In some embodiments, the client computing entity 102 may operate in accordance with multiple wireless communication standards and protocols, such as UMTS, CDMA2000, 1xRTT, WCDMA, GSM, EDGE, TD-SCDMA, LTE, E-UTRAN, EVDO, HSPA, HSDPA, Wi-Fi, Wi-Fi Direct, WiMAX, UWB, IR, NFC, Bluetooth, USB, and/or the like. Similarly, the client computing entity 102 may operate in accordance with multiple wired communication standards and protocols, such as those described above with regard to the computing entity 200 via a network interface 320.

Via these communication standards and protocols, the client computing entity 102 may communicate with various other entities using mechanisms such as Unstructured Supplementary Service Data (USSD), Short Message Service (SMS), Multimedia Messaging Service (MMS), Dual-Tone Multi-Frequency Signaling (DTMF), and/or Subscriber Identity Module Dialer (SIM dialer). The client computing entity 102 may also download code, changes, add-ons, and updates, for instance, to its firmware, software (e.g., including executable instructions, applications, program modules), and operating system.

According to some embodiments, the client computing entity 102 may include location determining aspects, devices, modules, functionalities, and/or similar words used herein interchangeably. For example, the client computing entity 102 may include outdoor positioning aspects, such as a location module adapted to acquire, for example, latitude, longitude, altitude, geocode, course, direction, heading, speed, universal time (UTC), date, and/or various other information/data. In some embodiments, the location module may acquire data, sometimes known as ephemeris data, by identifying the number of satellites in view and the relative positions of those satellites (e.g., using global positioning systems (GPS)). The satellites may be a variety of different satellites, including Low Earth Orbit (LEO) satellite systems, Department of Defense (DOD) satellite systems, the European Union Galileo positioning systems, the Chinese Compass navigation systems, Indian Regional Navigational satellite systems, and/or the like. This data may be collected using a variety of coordinate systems, such as the Decimal Degrees (DD); Degrees, Minutes, Seconds (DMS); Universal Transverse Mercator (UTM); Universal Polar Stereographic (UPS) coordinate systems; and/or the like. Alternatively, the location information/data may be determined by triangulating the position of the client computing entity 102 in connection with a variety of other systems, including cellular towers, Wi-Fi access points, and/or the like. Similarly, the client computing entity 102 may include indoor positioning aspects, such as a location module adapted to acquire, for example, latitude, longitude, altitude, geocode, course, direction, heading, speed, time, date, and/or various other information/data. Some of the indoor systems may use various position or location technologies including RFID tags, indoor beacons or transmitters, Wi-Fi access points, cellular towers, nearby computing devices (e.g., smartphones, laptops), and/or the like. For instance, such technologies may include the iBeacons, Gimbal proximity beacons, Bluetooth Low Energy (BLE) transmitters, NFC transmitters, and/or the like. These indoor positioning aspects may be used in a variety of settings to determine the location of someone or something to within inches or centimeters.

The client computing entity 102 may also comprise a user interface (that may include an output device 316 (e.g., display, speaker, tactile instrument, etc.) coupled to a processing element 308) and/or a user input interface (coupled to a processing element 308). For example, the user interface may be a user application, browser, user interface, and/or similar words used herein interchangeably executing on and/or accessible via the client computing entity 102 to interact with and/or cause display of information/data from the computing entity 200, as described herein. The user input interface may comprise any of a plurality of input devices 318 (or interfaces) allowing the client computing entity 102 to receive code and/or data, such as a keypad (hard or soft), a touch display, voice/speech or motion interfaces, or other input device. In some embodiments including a keypad, the keypad may include (or cause display of) the conventional numeric (0-9) and related keys (#, *), and other keys used for operating the client computing entity 102 and may include a full set of alphabetic keys or set of keys that may be activated to provide a full set of alphanumeric keys. In addition to providing input, the user input interface may be used, for example, to activate or deactivate certain functions, such as screen savers and/or sleep modes.

The client computing entity 102 may also include volatile memory 322 and/or non-volatile memory 324, which may be embedded and/or may be removable. For example, the non-volatile memory 324 may be ROM, PROM, EPROM, EEPROM, flash memory, MMCs, SD memory cards, Memory Sticks, CBRAM, PRAM, FeRAM, NVRAM, MRAM, RRAM, SONOS, FJG RAM, Millipede memory, racetrack memory, and/or the like. The volatile memory 322 may be RAM, DRAM, SRAM, FPM DRAM, EDO DRAM, SDRAM, DDR SDRAM, DDR2 SDRAM, DDR3 SDRAM, RDRAM, TTRAM, T-RAM, Z-RAM, RIMM, DIMM, SIMM, VRAM, cache memory, register memory, and/or the like. The volatile and non-volatile memory may store databases, database instances, database management systems, data, applications, programs, program modules, scripts, code (source code, object code, byte code, compiled code, interpreted code, machine code, etc.) that embodies one or more machine learning models or other computer functions described herein, executable instructions, and/or the like to implement the functions of the client computing entity 102. As indicated, this may include a user application that is resident on the client computing entity 102 or accessible through a browser or other user interface for communicating with the computing entity 200 and/or various other computing entities.

In another embodiment, the client computing entity 102 may include one or more components or functionalities that are the same or similar to those of the computing entity 200, as described in greater detail above. In one such embodiment, the client computing entity 102 downloads, e.g., via network interface 320, code embodying machine learning model(s) from the computing entity 200 so that the client computing entity 102 may run a local instance of the machine learning model(s). As will be recognized, these architectures and descriptions are provided for example purposes only and are not limited to the various embodiments.

In various embodiments, the client computing entity 102 may be embodied as an artificial intelligence (AI) computing entity, such as an Amazon Echo, Amazon Echo Dot, Amazon Show, Google Home, and/or the like. Accordingly, the client computing entity 102 may be configured to provide and/or receive information/data from a user via an input/output mechanism, such as a display, a camera, a speaker, a voice-activated input, and/or the like. In certain embodiments, an AI computing entity may comprise one or more predefined and executable program algorithms stored within an onboard memory storage module, and/or accessible over a network. In various embodiments, the AI computing entity may be configured to retrieve and/or execute one or more of the predefined program algorithms upon the occurrence of a predefined trigger event.

## III. Examples of Certain Terms

In some embodiments, the term **"target coding domain"** refers to a prediction space in which a plurality of codes is defined. A target coding domain may include any domain in which codes are used to capture an actionable insight. For example, a target coding domain may be a computer performance monitoring domain that leverages a plurality of codes to identify defined computing activities, defects, and other features predictive of a computer's performance. Other examples of target coding domains may include healthcare domains, business domains, financial domains, and/or the like. As an example, a healthcare domain may leverage a systematic coding of medical procedures and diagnoses for managing the health of participants within a healthcare system. These, healthcare codes, may include Current Procedural Terminology (CPT), Clinical Modification (CM), Procedure Coding System (PCS) codes, and/or the like that may be assigned to a participant based on the participant's activity within the healthcare domain (e.g., as reflected by a medical chart, etc.). CM codes, for example, may include a set of codes developed and maintained by the World Health Organization (WHO) that offers a system for classifying diseases, with detailed categorization of various signs, symptoms, abnormal findings, complaints, social circumstances, and external causes of injury or disease. CPT codes may include another set of codes developed by another agency (e.g., the American Medical Association) that include alphanumeric characters utilized by healthcare providers to document procedures and services performed during a healthcare visit. PCS codes may include yet another set of codes developed and maintained by yet another agency for classifying medical procedures and diagnoses.

Coding domains with disparate sets of codes managed by third parties, such as the healthcare example above, present several technical challenges to autonomous coding systems due to the intricate and variable nature of coding languages that may differ across agencies and coding systems. Some embodiments of the present disclosure address these technical challenges by presenting a multi-layered machine learning model that is tailored to a target coding domain. The multi-layered machine learning model may be trained, configured, and/or the like to receive an input data object and, responsive to the input data object, output a plurality of code predictions reflective of codes that are predicted to correspond to the input data object. By doing so, one multi-layered machine learning model may extract a set of relevant codes from a target coding domain for an input data object to provide actionable insights that are defined by various disparate entities within the domain.

In some embodiments, the term "**input data object**" refers to an input for a machine learning model that reflects one or more codes within a target coding domain. An input data object, for example, may include structured and/or unstructured text, one or more images, one or more alpha-numeric codes, such as those defined by a target coding domain, and/or the like. In some examples, an input data object may expressly identify only a portion of codes that may be derived from the information within the input data object. For instance, due to recordation deficiencies, modifications to a coding system, and/or other reasons, an input data object may inaccurately or incompletely denote a comprehensive set of codes for a participant within a target coding domain. In some examples, an input data object may be input to one or more autonomous coding techniques to identify the comprehensive set of codes from the structured and/or unstructured text, one or more images, and/or listed alpha-numeric codes within the input data object.

An input data object may depend on the target coding domain and may include any data reflective of (e.g., including predictive features for) a code defined within the target coding domain. For instance, in a computer performance monitoring domain, an input data object may include a computer activity log. As another example, in a healthcare domain, an input data object may include a patient chart that documents a comprehensive record including a participant's medical data, including diagnostics, treatments, doctors/practitioners' notes, historical health information, and/or the like.

In some embodiments, the term "**input feature vector**" refers to a vectorized representation of an input data object that reflects a plurality of predictive features from the input data object. An input feature vector, for example, may include a plurality of features extracted from an input data object that may be reflective of a code defined within a target coding domain. In some examples, an input data object may be preprocessed to generate an input feature vector. For instance, an input data object may be preprocessed using one or more optical character recognition (OCR) techniques, document segmentation techniques, and/or symbolic-artificial intelligence model (e.g., symbolic-AI model) to convert the input data object into one or more feature vectors ($[X_p]$, feature vector of input data object $p$) to be used by one or more downstream models, such as the multi-layered machine learning model described herein. In some examples, the input feature vector, $[X_p]$, may be a multi-dimensional tensor, which has both structured symbolic-AI model outputs, unstructured pre-processed text, and other features that may be leveraged by the downstream models.

In some embodiments, the term "**symbolic-AI model**" refers to a data entity that describes parameters, hyper-parameters, and/or defined operations of a rules-based and/or machine learning model (e.g., model including at least one of one or more rule-based layers, one or more layers that depend on trained parameters, coefficients, and/or the like). A symbolic-AI model leverages a combination of symbolic manipulation (e.g., language models, etc.) and rule-based processing to extract predictive features (e.g., medical facts in a healthcare domain, etc.) from an input data object by leveraging a predefined knowledge base and set of rules. The symbolic-AI model may leverage one or more vector comparisons to identify relationships between various data points, such as codes, terminologies, labs, vitals, markers, and/or the like and uses its knowledge base to interpret and associate the data. By incorporating external information for a target coding domain (e.g., literature for computing efficiency in a computer performance domain, medical research and guidelines in a healthcare domain, etc.) a symbolic-AI model may continuously enhance its knowledge base, enabling efficient and accurate analysis of complex data.

In some embodiments, the term "**multi-layered machine learning model**" refers to a machine learning model data structure that includes and transfers data between a plurality of a machine learning, algorithmic, and other models via a plurality of residual connections to create a multi-layered output. A multi-layered machine learning model, for example, may include a hierarchical model fusion architecture (H-MFA) that leverages a MoE for autonomous coding. The architecture may define a plurality of hierarchical layers and information pathways within and between the layers to facilitate a cohesive prediction from a plurality of traditionally disparate component models. When applied to autonomous coding, the hierarchical layers and residual connections defined by the multi-layered machine learning model enable information sharing between a plurality of models operating at different code granularity levels. The multi-layered machine learning model may define aggregation models within each layer to integrate insights across the layers of the model. The multi-layered machine learning model may define a final fusion layer to produce a comprehensive output for a target coding domain by fusing the insights across each of the hierarchical layers.

In some embodiments, multi-layered machine learning model includes a plurality of hierarchical layers. At each hierarchical layer, the multi-layered machine learning model may include (i) a plurality of machine learning models (e.g., layer models) that each specialize in a certain subset of data or a particular task (e.g., language processing, structure data processing, etc.) and (ii) a metamodel that is configured and/or trained to combine the outputs from each of the plurality of machine learning models into a single output. The multi-layered machine learning model may define a plurality of hierarchical pathways between each of the layer models and the metamodel to share information within and between hierarchical layers of the multi-layered machine learning model. In some examples, each hierarchical layer may specialize in a specific code range or classification task, creating a model pipeline where the expertise of individual models is leveraged for more accurate overall predictions. This hierarchical arrangement allows the entire pipeline to efficiently manage a wide range of coding tasks, enhancing performance by utilizing the specific strengths of each model at different levels of the hierarchy.

The multi-layered machine learning model includes a plurality of hierarchical layers that decrease in granularity. For example, the plurality of hierarchical layers may include three layers for a target coding domain. A first layer may process an input data object and output predictions for a first subset of codes from the target coding domain. The first subset of codes may include a set of most frequently used codes that are associated with sufficient training data to generate granular predictions. A second layer may process the input data object and output predictions for a second subset of codes from the target coding domain. The second subset of codes may include the set of most frequently used codes and additional codes that are associated with limited training data to generate predictions of less granularity than the first layer. A third layer may process the input data object and output predictions for all of the codes defined within the target coding domain, including codes with minimal training data. At each current layer, outputs from the preceding layers may be transferred, through residual connections, to the models of the current layer. In this way, models trained for less granular predicting may leverage insights from the previous layers to improve predictions for rare, less frequent, and difficult to predict codes, without degrading predictions for frequent, easier to predict codes.

In some embodiments, the term "**hierarchical layer**" refers to a portion (e.g., layer) of a multi-layered machine learning model with a defined hierarchical relationship to other portions (e.g., layers) of the multi-layered machine learning model. In some examples, a hierarchical layer may include two sublayers, a prediction layer and an aggregate layer. The prediction layer may include a plurality of layer models configured for a particular set of codes from a plurality of codes within a target coding domain. The aggregate layer may include a layer metamodel configured to aggregate a plurality of predictions output by the plurality of layer models. Each sublayer of a hierarchical layer may be connected, through a plurality of residual connections, to the sublayers of a preceding hierarchical layers and a subsequent hierarchical layers. In this way, each sublayer may leverage insights from the preceding hierarchical layers and pass on insights to the subsequent hierarchical layers.

A number of hierarchical layers defined by a multi-layered machine learning model may be domain specific. A multi-layered machine learning model, for example, may define two, three, ten, twenty, and/or any other number of layers. In some examples, the number of hierarchical layers may be based on one or more code-level attributes for each code defined within a target coding domain. For instance, the number of layers may be based on a frequency metric associated with each of the plurality of codes. By way of example, each of the hierarchical layers may be defined based on a relative frequency threshold. In other examples, each of the hierarchical layers may be defined based on attributes, such as data source, provider, data age, code categories, and/or any other shared attribute impacting predictions for a set of codes. In some examples, instead of static layers, the multi-layered machine learning model may employ a dynamic layer generation model that dynamically adjusts layers on-the-fly depending on incoming data patterns.

In some embodiments, the term "**residual connection**" refers to a data stream between two models and/or hierarchical layers of the multi-layered machine learning model. A residual connection, for example, may include an integral pathway that ensures the continual transfer and availability of data across the multi-layered machine learning model. Residual connections, for example, may channel the layer code predictions from lower hierarchical layers to higher hierarchical layers to allow higher-level layers access to three sets of information, the specific layer outputs of the higher-level layer, outputs from previous layers' metamodels, and direct predictions from the individual models of the earlier layers. By doing so, the residual connections prevent data loss and enhance the depth of analysis and accuracy at each layer of the multi-layered machine learning model.

In some embodiments, the term "**frequency metric**" refers to a code level metric that reflects a recorded number of code occurrences within a plurality of data objects. A frequency metric, for example, may identify a total number of code occurrences (e.g., presence of a code within a data object) across a plurality of historical data objects. In addition, or alternatively, a frequency metric may identify a code occurrence percentile, ratio, and/or any other value reflective of a relative frequency of a code within a plurality of historical data objects. In some examples, one or more machine learning models of the present disclosure may be trained using the plurality of historical data objects as training entries in a training dataset. In some examples, a code occurrence may be used as a ground truth label for labeling the training entries. In this way, high frequency codes (e.g., associated with a greater number of code occurrences relative to other codes) may be associated with a larger training dataset relative to low frequency codes (e.g., associated with a lower number of code occurrences relative to other codes).

In some embodiments, the term "**relative frequency threshold**" refers to minimum frequency metric of a hierarchical layer. A relative frequency threshold, for example, may identify a code boundary for a hierarchical layer. In some examples, a relative frequency threshold may define a threshold frequency metric, such as a threshold number of code occurrences, a threshold occurrence ratio, and/or the like. In addition, or alternatively, a relative frequency threshold may be defined based on a threshold number of codes for particular hierarchical layer. For instance, a first hierarchical layer may define a threshold number of 100 hundred codes. In such a case, the relative frequency threshold may include the 100th highest frequency metric from a plurality of frequency metrics respectively corresponding to the plurality of codes within a target coding domain.

In some embodiments, the term "**layer model**" refers to a predictive model within a hierarchical layer. A layer model may be a data entity that describes parameters, hyper-parameters, and/or defined operations of a rules-based and/or machine learning model (e.g., model including at least one of one or more rule-based layers, one or more layers that depend on trained parameters, coefficients, and/or the like). A layer model may include any type of model configured, trained, and/or the like to generate a layer code prediction for an input data object. A layer model may include one or more of any type of machine learning model including one or more supervised, unsupervised, semi-supervised, reinforcement learning models, generative, and/or the like. In some examples, the engagement prediction model may include a machine learning model, such as a neural network, random forest model, naive bayes classifier, support vector machine, and/or any other machine learning text-based classifier. In addition, or alternatively, a layer model may include rules-based model.

In some examples, the layer model may include a layer model ensemble $M_i^k$ that includes a plurality of models configured for a set of codes associated with a particular hierarchical layer. A layer model ensemble, for example, may include a plurality of dedicated machine learning models designed to predict a subset of codes corresponding to a particular hierarchical layer. Each layer increases in the breadth of codes it targets, based on predetermined criteria like frequency distribution, as discussed here. $M_i^k$ may denote the ith model of hierarchal layer, $k$, where there may be 1 - i models operating on the code space designated for hierarchal layer $k$. Each model may be algorithmically different in nature to other models in the hierarchal layer. For example, the $M$ might be a gradient boosted ensemble model operating on the features extracted from the S-AI NLP or a Large Language Model (LLM) operating either on patient chart text.

A layer model may receive, as input, an input data object and/or one or more input feature vectors from the input data object. In addition, or alternatively, a layer model may receive a plurality of preceding layer code predictions output by preceding layer models of hierarchal layers preceding the hierarchal layer of the layer model within the multi-layered machine learning model. Each layer may model process the model inputs to generate one or more probabilistic and/or deterministic outputs specific to their designated code subsets. In some examples, each of the layer models may be trained on a designated code subset (e.g., training data corresponding to the designated code subset) to learn patterns specific to the designated code subset. As the layers progress, they encompass broader code sets, ensuring a wide net of code consideration.

In some examples, input feature vectors, $[X_p]$, may be processed through a series of layer models. In some examples, the input feature vectors, $[X_p]$, may be divided into a plurality of model specific tensor vectors.

For instance, language models from the $M_i^k$ models may receive text vectors from the input feature vectors, $[X_p]$, whereas the classification model may receive structured vectors from the input feature vectors, $[X_p]$.

In some examples, each layer model may be configured and/or trained for one or more codes from a specific subset of codes corresponding to a respective hierarchical layer. In some examples, the specific subset of codes for each hierarchical layer may be based on frequency metrics for a plurality of codes. For instance, a first layer model associated with a first hierarchical layer may be configured and/or trained for a first plurality of codes (e.g., fifty most frequent codes, etc.), a second layer model associated with a second hierarchical layer may be configured and/or trained for a second plurality of codes (e.g., one hundred most frequent codes, etc.), a third layer model associated with a third hierarchical layer may be configured and/or trained for a third plurality of codes (e.g., two hundred most frequent codes, etc.), and/or the like. The code distribution of the layers is done in order to provide more complex models a finite label space to operate in and understand the generalizable patterns for coding. The different models in a layer may be configured for one or a plurality of different modalities (e.g., natural language text, structured text, image, code, etc.).

In some examples, the multi-layered machine learning model may include a three-layer model with a fusion layer. The three layers may include (i) a first hierarchical layer with one or more first layer model configured and/or trained for K-high frequency codes, (ii) a second hierarchical layer with one or more second layer models configured and/or trained for a large code space (e.g., including 98% distribution of codes), and (iii) a third hierarchical layer with one or more third layer models configured and/or trained for the entire target coding domain.

In some embodiments, the term **"layer code prediction"** refers to an output from a layer model defined within a hierarchical layer. A layer code prediction may depend on the form of the layer model. For example, a layer code prediction may include a deterministic output, a probabilistic output, and/or the like. A probabilistic output, for example, may indicate a likelihood (e.g., a ratio, percentage, etc.) of a particular code. A deterministic output may include multi-label vector (e.g., including a binary indicator for each of subset of codes). In some examples, a layer code prediction may include a confidence score associated with the probabilistic and/or deterministic output. In some examples, a layer code prediction may include a confidence score for each label of a multi-label vector.

In some embodiments, the term **"code-level performance metric score"** refers to a performance metric of a layer model defined within the multi-layered machine learning model. For example, a code-level performance metric score may include one or more performance metrics for a layer model that are determined during a validation stage of a training process. A code-level performance metric score may include a F1-score, precision score, recall score, accuracy, and/or the like. Each code-level performance metric score may correspond to a particular layer model and a code. In this way, each code-level performance metric score may identify a layer model's performance with respect to an individual code.

In some embodiments, the term **"layer metamodel"** refers to an aggregation model within a hierarchical layer. A layer metamodel may be a data entity that describes parameters, hyper-parameters, and/or defined operations of a rules-based and/or machine learning model (e.g., model including at least one of one or more rule-based layers, one or more layers that depend on trained parameters, coefficients, and/or the like). A layer metamodel may include any type of model configured, trained, and/or the like to generate an intermediate code prediction for an entity data object. A layer metamodel may include one or more of any type of machine learning model including one or more supervised, unsupervised, semi-supervised, reinforcement learning models, generative, and/or the like. In some examples, the layer metamodel may include a machine learning model, such as a neural network, random forest model, naive bayes classifier, support vector machine, and/or any other machine learning text-based classifier.

A layer metamodel (L-Meta) may be positioned after the layer models in a particular hierarchical layer and may be configured and/or trained synthesize intermediate code predictions from the outputs of (i) the layer models within the hierarchical layer and (ii) the outputs of layer models and/or metamodels from preceding hierarchical layers of the multi-layered machine learning model. A layer metamodel may include one or more machine learning models, such as classification-based ensemble models (e.g., random forest, XGBoost, regression models, etc.), and/or the like, that may be trained and/or configured to generate probabilistic outputs (e.g., between 0 and 1) from a plurality of model outputs. By way of example, a layer metamodel may receive outputs from the layer models and process them to infer patterns, relationships, and potential correlations. The resultant intermediate code predictions may be provided as input for subsequent metamodels, setting up a hierarchical flow of information.

In some examples, each hierarchical layer of the multi-layered machine learning model may include a layer metamodel (e.g., models (K, L, A)). A metamodel may implement a MoE approach to synthesize probabilistic data and multi-label vectors into intermediate code predictions. The layer metamodel may receive inputs from the layer models within its hierarchical layer and prior layer metamodels. For instance, in a three-layer example, (i) a first layer metamodel (K metamodel) associated with a first hierarchical layer may receive a plurality of first layer code predictions from the first layer models within the first hierarchical layer, (ii) a second layer metamodel (L metamodel) associated with a second hierarchical layer may receive (a) a plurality of second layer code predictions from the second layer models within the second hierarchical layer and (b) a plurality of first intermediate code predictions from the first layer metamodel (K metamodel), and (iii) a third layer metamodel (A metamodel) associated with a third hierarchical layer may receive (a) a plurality of third layer code predictions from the third layer models within the third hierarchical layer, (b) a plurality of first intermediate code predictions from the first layer metamodel (K metamodel), and (c) a plurality of second intermediate code predictions from the second layer metamodel (L metamodel). This allows for hierarchical information flow, where high frequency model layers may provide information to large code space metamodels.

In some embodiments, a type of layer metamodel may depend on the hierarchical layer. By way of example, a first layer metamodel may include an attention-based metamodel. In addition, or alternatively, a second layer metamodel may include supervised machine learning classification model. As another example, a third layer metamodel may include a rule-based model.

In addition, or alternatively, the multi-layered machine learning model may define a plurality of residual connections between the layer models in a hierarchical layer and the layer metamodels in subsequent hierarchical layers. In this manner, (i) a second layer metamodel (L metamodel) associated with a second hierarchical layer may receive a plurality of first layer code predictions from the first layer models within the first hierarchical layer and (ii) a third layer metamodel (A metamodel) associated with a third hierarchical layer may receive (a) a plurality of first layer code predictions from the first layer models within the first hierarchical layer, and (b) a plurality of second layer code predictions from the second layer models within the second hierarchical layer. This ensures that each layer metamodel has access to data from its specific layer outputs, outputs from preceding layer metamodels, and individual model predictions from earlier layers. This allows for a more wide-ranging field of view of the layer metamodels for code output.

In some embodiments, the term "**intermediate code prediction**" refers to an output from a layer metamodel defined within a hierarchical layer. An intermediate code prediction may depend on the form of the layer model defined within the hierarchical layer. For example, an intermediate code prediction may include a deterministic output, a probabilistic output, and/or the like that is selected from a plurality of layer code predictions. In addition, or alternatively, an intermediate code prediction may include probabilistic value (e.g., between 0 and 1) that synthesizes a plurality of layer code predictions (e.g., output from current layer models or preceding layer models) and/or preceding intermediate code predictions.

In some examples, an intermediate code prediction may include a value (e.g., probabilistic value, deterministic value, etc.) for a particular code of a subset of codes associated with a hierarchical layer. In some examples, layer metamodel for a particular hierarchical layer may generate one intermediate code prediction for each code of the subset of codes associated with the particular hierarchical layer. By way of example, (i) a first layer metamodel (K metamodel) associated with a first hierarchical layer may output a plurality of intermediate code predictions respectively corresponding to a first plurality of codes of a first designated code subset for the first hierarchical layer, (ii) a second layer metamodel (L metamodel) associated with a second hierarchical layer may output a plurality of intermediate code predictions respectively corresponding to a second plurality of codes of a second designated code subset for the second hierarchical layer, and (iii) a third layer metamodel (A metamodel) associated with a third hierarchical layer may output a plurality of intermediate code predictions respectively corresponding to a third plurality of codes of a third designated code subset for the third hierarchical layer

In some embodiments, the term "fusion model" refers to an aggregation model for each hierarchical layer of the multi-layered machine learning model. A fusion model may be a data entity that describes parameters, hyper-parameters, and/or defined operations of a rules-based and/or machine learning model (e.g., model including at least one of one or more rule-based layers, one or more layers that depend on trained parameters, coefficients, and/or the like). The fusion model may include a final fusion layer of the multi-layered machine learning model that synthesizes (e.g., fuses) model outputs from each hierarchical layer (e.g., including the layer and metamodels thereof) of the multi-layered machine learning model. For example, the fusion model may receive, as input, a plurality of layer code predictions and a plurality of intermediate code predictions from each of the hierarchical layers of the multi-layered model. In some examples, the fusion model may include a structured boosting mechanism that may leveraged to modulate the plurality of layer code predictions based on at least one of a model confidence and/or a code-level performance metric score associated with each layer code prediction. In some examples, the structured boosting mechanism may be optimized using Bayesian optimization, particle swarm optimization, and/or the like. The fusion model may apply the structured boosting mechanism (and/or a gating mechanism) to synthesize the plurality of inputs (e.g., layer code predictions and intermediate code predictions) into a plurality of fused code predictions. The fused code predictions, for example, may include a fused code prediction for each code defined within a target coding domain.

In some examples, the structured boosting mechanism may modulate layer code predictions, such as $P1_C$, $P2_C$ (from probabilistic models) and a deterministic predictions P3c (e.g., from the S-AI NLP model), based on a code-level performance metric score ($F1_C$, $F2_C$, $F3_C$) that corresponds to the code (C) and the layer model associated with the layer code prediction. In some examples, an aggregate probability $P_C$ for the code C may be generated by:

$$P_C = \frac{(P1_C \; x \; F1_C) + (P2_C \; x \; F2_C)}{F1_C + F2_c}$$

In some examples, the Pc may be adjusted/influenced by the deterministic prediction P3c. This is achieved through a modulating factor $\alpha$, which may vary based on the frequency metric associated with the code, C. For example, if P3c is 1 (indicating a positive prediction for the label), the influence may be additive:

$$P_C = P_C + \alpha \; x \; P_c \; x \; F3_c$$

In addition, or alternatively, if P3c is 0 (indicating a negative prediction for the label), the influence may be subtractive:

$$P_C = P_C - \alpha \; x \; P_c \; x \; F3_c$$

In this way, a modulating factor $\alpha$ may dynamically adjust output based on an expected level of trust for a prediction of a code. The value of $\alpha$ may be determined through optimization techniques (such as Bayesian or Grid), or, alternatively, derived from the frequency metrics (and/or other attributes, such as factors like prediction confidence, data source reliability, recent model performance, etc.) for a code. For instance, $\alpha$ may be

small for high-frequency labels (indicating greater trust in the probabilistic models) and larger for low-frequency labels. In some examples, an inverse frequency distribution curve be leveraged to generate the modulating factor α.

In some embodiments, the term "**fused code prediction**" refers to an output from a fusion model. A fused code prediction, for example, may be a probabilistic output from a fusion model of the multi-layered machine learning model that synthesizes layer and intermediate predictions from each hierarchical layer of the multi-layered machine learning model. In some examples, the fusion model of the multi-layered machine learning model may output a fused code prediction for each code defined within a target coding domain.

In some embodiments, the term "**model prediction**" refers to an output from the multi-layered machine learning model. A model prediction may be a deterministic output from the multi-layered machine learning model that is based on a fused code prediction. In some examples, the multi-layered machine learning model may output a model prediction for each code defined within a target coding domain. In some examples, the model predictions may include binary labels for each of the code identifying if a code is predicted to correspond (e.g., a "1") to an input data object or the code is predicted to not correspond (e.g., a "0") the input data object. In some examples, the multi-layered machine learning model may output a set of codes associated with model prediction identifying that that codes are predicted to correspond (e.g., a "1") to the input data object. By way of example, a concluding output from the multi-layered machine learning model may represent the predicted codes for the input data object. In this way, the multi-layered machine learning model may output a set of codes (e.g., computer performance codes, medical codes, etc.) that are inferred from an input data object without an express indication of the codes within the input data object.

In some embodiments, the term "**staged training technique**" refers to a sequential training process for training a multi-layered machine learning model. The staged training technique, for example, may include a plurality of stages. During each stage, one or more different models may be trained through one or more model training operations (e.g., back-propagation of errors, gradient descent, etc.). In some examples, during each stage, a plurality of models may be trained across each of the hierarchical layers of the multi-layered machine learning model. Each model (e.g., layer model, layer metamodel, etc.) may be trained using a training dataset corresponding to the hierarchical layer in which the model resides. For example, each hierarchical layer may be associated with a labeled training dataset that includes a plurality of labelled training entries corresponding to the designation code subset of the hierarchical layer.

In some examples, during a first stage, a plurality of layer models for each hierarchical layer of the multi-layered machine learning model may be individually trained using the training sets corresponding to their respective hierarchical layers. In a second stage, the learned weights of the plurality of layer models may be frozen and the plurality of layer metamodels for each hierarchical layer of the multi-layered machine learning model may be trained using the training sets corresponding to their respective hierarchical layers and the outputs from the frozen layer models. In a third stage, the learned weights of the plurality of layer models and the plurality of metamodels may be frozen and the fusion model may be trained using the training set from the last hierarchical layer and the model outputs from each of the frozen layer and metamodels.

In some examples, the models of the multi-layered machine learning model may be trained using data partitions from a plurality historical data objects. In some examples, the data partitioning mechanism may partition the historical data objects into - 1) layer model partition, 2) metamodel partition, 3) fusion partition, and 4) validation partition. The layer model partition may be used to train and evaluate the layer models ( $M_i^k$ ). The metamodel partition may be used to train and evaluate the metamodels (K, L, A). The fusion partition may be used to train and evaluate the fusion model. The validation partition may be used to validate the multi-layered machine learning model's end-to-end operation. The layer model partition, metamodel partition, and fusion partition may be divided into train, test and validation datasets.

In some embodiments, the multi-layered machine learning model is iteratively trained and retrained based on received historical data objects to prevent inaccuracies due to data drift. For example, an iterative approach may be applied to continually refine weights as more data is processed and/or as models are updated within the multi-layered machine learning model.

**IV. Overview**

Various embodiments of the present disclosure provide machine learning architectures and training techniques that improve the functionality of a computer with respect to various computing tasks, include autonomous coding. To do so, some embodiments of the present disclosure provide a multi-layered model architecture that defines a plurality of hierarchical layers and residual connection therebetween that facilitate information sharing within and between the hierarchical layers. To overcome performance deficiencies with tradition models, the multi-layered model architecture may define hierarchical layers that house models specializing at different levels of generality. The residual connections between the hierarchical layers enable information sharing from one hierarchical layer to subsequent hierarchical layers that increasingly expand the scope (e.g., generalizability) of predictions. By doing so, the multi-layered model architecture may improve predictions of generalized model without reducing the performance of model preceding the generalized model. This, in turn, enables robust, general predictions that are grounded by narrowly tailored machine learning models. Unlike traditional techniques, these general predictions may cover a prediction space of any size without reductions in predictive accuracy.

The present disclosure provides model framework that provides a layered, adaptive approach, tailored to the intricacies of data within a particular domain. The framework, for example, may define a layered modeling architecture that forms hierarchical layers based on a predictive capacity of an attribute within a particular domain. For instance, the architecture may segregate model layers based on a frequency of a label, such as a code (e.g., the training data available for). By doing so, the architecture may separate and individually train models based on a size of a training dataset available for the models at each layer. Moreover, at each layer, metamodels may be implemented to fuse insight from both probabilistic and deterministic outputs. This allows for flexibility to employ move complex model ensembles of various modalities (e.g., classification-based ensemble models, regression-based models, etc.) that may be tailored to a domain, such as a target coding domain.

In addition to the hierarchical layers, the present disclosure provides model framework that connects models within and between the layers via residual connection to improve information sharing. The architecture, for example, may employ residual connections as direct pathways for individual model predictions from lower layers to higher-level meta models. This ensures retention and utilization of valuable lower-layer information as the process advances through the hierarchy. In addition, a fusion model may be implemented that leverages a structured, metric-based, boosting mechanism to tailor boosting to component model confidences gauged through specific code-level metrics. This allows for the amalgamation of both probabilistic and deterministic model outputs. In some examples, these outputs may be dynamically adjusted via a modulating factor based on label frequency. The dynamic modulating factor may be adaptively altered based on the frequency of the label using an inverse frequency distribution curve to ensure an automatic adjustment of the model's trust level based on the domain. This, in turn, improved the synthesis of a plurality of disparate model predictions and, ultimately, improves the performance of machine learning technology.

Examples of technologically advantageous embodiments of the present disclosure include improved: (i) model architecture, (ii) training techniques, among other aspects of the present disclosure. Other technical improvements and advantages may be realized by one of ordinary skill in the art.

## V. Example System Operations

As indicated, various embodiments of the present disclosure make important technical contributions to computer functionality. In particular, systems and methods are disclosed herein that implement machine learning techniques to improve machine learning model performance with respect to various tasks, including autonomous coding. By doing so, the machine learning techniques of the present disclosure enables improved machine learning models that, when executed on a computer, reduce the processing, memory, and temporal requirements for various computing tasks. This, in turn, may improve the functionality of a computer with respect to various computing tasks, including computer security, classification, prediction, and the like.

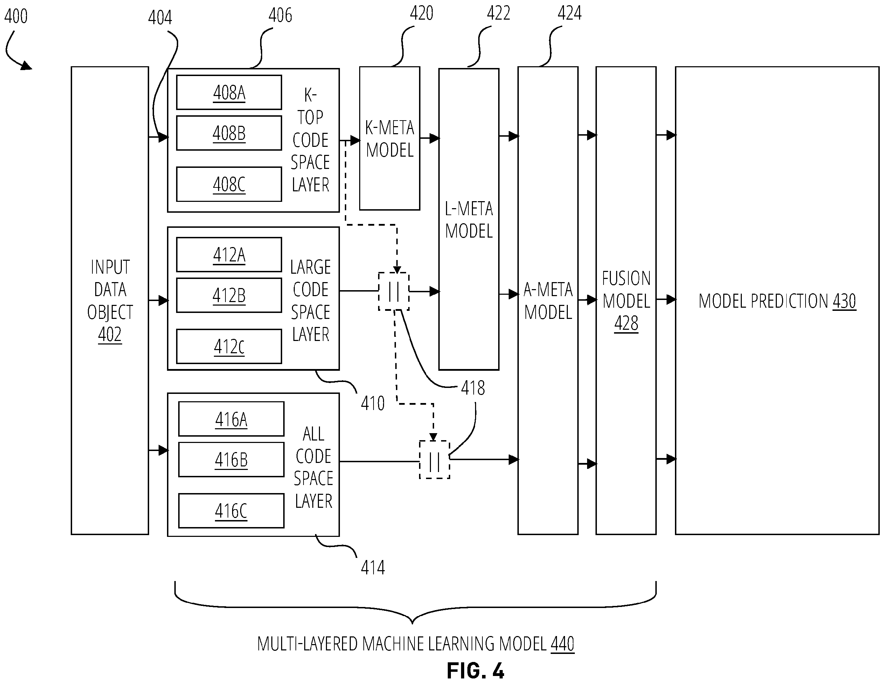

FIG. 4 is an operational example 400 of a multi-layered autonomous coding framework in accordance with some embodiments of the present disclosure. The multi-layered autonomous coding framework includes a multi-layered machine learning model 440 configured to receive an input data object 402 (and/or input feature vectors 404 thereof) and generate, based on the input data object 402, a model prediction 430 reflective of one or codes with a target coding domain. The multi-layered machine learning model 440 may be domain specific. To overcome several technical challenges with respect to autonomous coding, the multi-layered machine learning model 440 may define an information sharing structure that organizes and connects a plurality of different domain-specific models across hierarchical layers of the multi-layered machine learning model 440. By doing so, the multi-layered machine learning model 440 may fuse predictions across different predictive techniques through multiple stages that iteratively boost predictive performance, while reducing information loss.

In some embodiments, an input feature vector 404 is input to a layer model of the multi-layered machine learning model 440 to generate a layer code predictions for one or more codes of a plurality of codes defined within a target coding domain. For instance, input feature vectors 404 from the input data object 402 may be input to one or more first layer models 408A-C of the multi-layered machine learning model 440 to generate one or more first layer code predictions for one or more codes of a plurality of codes defined within the target coding domain. In some examples, the first layer models 408A-C may include a first layer model ensemble and the first layer code predictions may include a plurality of first layer code-specific predictions for each of the one or more codes of the first layer. The plurality of layer code-specific predictions, for example, may include one or more deterministic and/or probabilistic predictions.

In addition, or alternatively, the input feature vectors 404 may be input to one or more second layer models 412A-C of the multi-layered machine learning model 440 to generate second layer code predictions for one or more of the plurality of codes, one or more third layer models 416A-C of the multi-layered machine learning model 440 to generate third layer code predictions for one or more of the plurality of codes, and/or the like. In some examples, the second layer models 412A-C may include a second layer model ensemble and the second layer code predictions may include a plurality of second layer code-specific predictions for each of the one or more codes of the second layer. In some examples, the third layer models 416A-C may include a third layer model ensemble and the third layer code predictions may include a plurality of third layer code-specific predictions for each of the one or more codes of the third layer.

In some embodiments, the input data object 402 is an input for a machine learning model that reflects one or more codes within a target coding domain. An input data object 402, for example, may include structured and/or unstructured text, one or more images, one or more alpha-numeric codes, such as those defined by a target coding domain, and/or the like. In some examples, an input data object 402 may expressly identify only a portion of codes that may be derived from the information within the input data object 402. For instance, due to recordation deficiencies, modifications to a coding system, and/or other reasons, an input data object 402 may inaccurately or incompletely denote a comprehensive set of codes for a participant within a target coding domain. In some examples, an input data object 402 may be input to one or more autonomous coding techniques to identify the comprehensive set of codes from the structured and/or unstructured text, one or more images, and/or listed alpha-numeric codes within the input data object 402.

The input data object 402 may depend on the target coding domain and may include any data reflective of (e.g., including predictive features for) a code defined within the target coding domain. For instance, in a computer performance monitoring domain, an input data object 402 may include a computer activity log. As another example, in a healthcare domain, an input data object 402 may include a patient chart that documents a comprehensive record including a participant's medical data, including diagnostics, treatments, doctors/practitioners' notes, historical health information, and/or the like.

In some embodiments, an input feature vector 404 is a vectorized representation of an input data object 402 that reflects a plurality of predictive features from the input data object 402. An input feature vector 404, for example, may include a plurality of features extracted from an input data object 402 that may be reflective of a code defined within a target coding domain. In some examples, an input data object 402 may be preprocessed to generate an input feature vector 404. For instance, an input data object 402 may be preprocessed using one or more optical character recognition (OCR) techniques, document segmentation techniques, and/or symbolic-artificial intelligence model (e.g., symbolic-AI model) to convert the input data object 402 into one or more input

feature vectors 404 ($[X_p]$) feature vector of input data object $p$) to be used by one or more downstream models, such as the multi-layered machine learning model 440 described herein. In some examples, the input feature vector 404, $[X_p]$" may be a multi-dimensional tensor, which has both structured symbolic-AI model outputs, unstructured pre-processed text, and other features that may be leveraged by the downstream models.

In some embodiments, a symbolic-AI model is a data entity that describes parameters, hyper-parameters, and/or defined operations of a rules-based and/or machine learning model (e.g., model including at least one of one or more rule-based layers, one or more layers that depend on trained parameters, coefficients, and/or the like). A symbolic-AI model leverages a combination of symbolic manipulation (e.g., language models, etc.) and rule-based processing to extract predictive features (e.g., medical facts in a healthcare domain, etc.) from an input data object 402 by leveraging a pre-defined knowledge base and set of rules. The symbolic-AI model may leverage one or more vector comparisons to identify relationships between various data points, such as codes, terminologies, labs, vitals, markers, and/or the like and uses its knowledge base to interpret and associate the data. By incorporating external information for a target coding domain (e.g., literature for computing efficiency in a computer performance domain, medical research and guidelines in a healthcare domain, etc.) a symbolic-AI model may continuously enhance its knowledge base, enabling efficient and accurate analysis of complex data.

In some embodiments, the multi-layered machine learning model 440 is a machine learning model data structure that includes and transfers data between a plurality of a machine learning, algorithmic, and other models via a plurality of residual connections 418 to create a multi-layered output. A multi-layered machine learning model 440, for example, may include a H-MFA that leverages a MoE approach for autonomous coding. The architecture may define a plurality of hierarchical layers and information pathways within and between the layers to facilitate a cohesive prediction from a plurality of traditionally disparate component models. When applied to autonomous coding, the hierarchical layers and residual connections 418 defined by the multi-layered machine learning model 440 enable information sharing between a plurality of models operating at different code granularity levels. The multi-layered machine learning model 440 may define aggregation models within each layer to integrate insights across the layers of the model. The multi-layered machine learning model 440 may define a final fusion layer to produce a comprehensive output for a target coding domain by fusing the insights across each of the hierarchical layers.

In some embodiments, multi-layered machine learning model 440 includes a plurality of hierarchical layers. At each hierarchical layer, the multi-layered machine learning model 440 may include (i) a plurality of machine learning models (e.g., first layer models 408A-C, second layer models 412A-C, third layer models 416A-C, etc.) that each specialize in a certain subset of data or a particular task (e.g., language processing, structure data processing, etc.) and (ii) a metamodel (e.g., first layer metamodel 420, second layer metamodel 422, third layer metamodel 424, etc.) that is configured and/or trained to combine the outputs from each of the plurality of machine learning models into a single output. The multi-layered machine learning model 440 may define a plurality of hierarchical pathways between each of the layer models and the metamodel to share information within and between hierarchical layers of the multi-layered machine learning model 440. In some examples, each hierarchical layer may specialize in a specific code range or classification task, creating a model pipeline where the expertise of individual models is leveraged for more accurate overall predictions. This hierarchical arrangement allows the entire pipeline to efficiently manage a wide range of coding tasks, enhancing performance by utilizing the specific strengths of each model at different levels of the hierarchy.

In some embodiments, a residual connection 418 is to a data stream between two models and/or hierarchical layers of the multi-layered machine learning model 440. A residual connection 418, for example, may include an integral pathway that ensures the continual transfer and availability of data across the multi-layered machine learning model 440. Residual connections, for example, may channel the layer code predictions from lower hierarchical layers to higher hierarchical layers to allow higher-level layers access to three sets of information, the specific layer outputs of the higher-level layer, outputs from previous layers' metamodels, and direct predictions from the individual models of the earlier layers. By doing so, the residual connections 418 prevent data loss and enhance the depth of analysis and accuracy at each layer of the multi-layered machine learning model 440.

In some embodiments, a layer model is a predictive model within a hierarchical layer. A layer model may be a data entity that describes parameters, hyperparameters, and/or defined operations of a rules-based and/or machine learning model (e.g., model including at least one of one or more rule-based layers, one or more layers that depend on trained parameters, coefficients, and/or the like). A layer model may include any type of model configured, trained, and/or the like to generate a layer code prediction for an input data object 402. A layer model may include one or more of any type of machine learning model including one or more supervised, unsupervised, semi-supervised, reinforcement learning models, and/or the like. In some examples, the engagement prediction model may include a machine learning model, such as a neural network, random forest model, naive bayes classifier, support vector machine, and/or any other machine learning text-based classifier. In addition, or alternatively, a layer model may include rules-based model.

In some examples, the layer model may include a layer model ensemble $M_i^k$ that includes a plurality of models configured for a set of codes associated with a particular hierarchical layer. A layer model ensemble, for example, may include a plurality of dedicated machine learning models designed to predict a subset of codes corresponding to a particular hierarchical layer. Each layer increases in the breadth of codes it targets, based on predetermined criteria like frequency distribution, as discussed here. $M_i^k$ may denote the $i^{th}$ model of hierarchal layer, $k$, where there may be 1 - i models operating on the code space designated for hierarchal layer $k$. Each model may be algorithmically different in nature to other models in the hierarchal layer. For example, the $M$ might be a gradient boosted ensemble model operating on the features extracted from the S-AI NLP or a Large Language Model (LLM) operating either on patient chart text.

A layer model may receive, as input, an input data object 402 and/or one or more input feature vectors 404 from the input data object 402. In addition, or alternatively, a layer model may receive a plurality of preceding layer code predictions output by preceding layer models of hierarchal layers preceding the hierarchal layer of the layer model within the multi-layered machine learning model 440. Each layer may model process the model inputs to generate one or more probabilistic and/or deterministic outputs specific to their designated code subsets. In some examples, each of the layer models may be trained on a designated code subset (e.g., training data corresponding to the designated code subset) to learn patterns specific to the designated code subset. As the layers progress, they encompass broader code sets, ensuring a wide net of code consideration.

In some examples, input feature vectors 404, $[X_p]$, may be processed through a series of layer models. In some examples, the input feature vectors 404, $[X_p]$, may be divided into a plurality of model specific tensor vectors. For instance, language models from the $M_i^k$ models may receive text vectors from the input feature vectors 404, $[X_p]$, whereas the classification model may receive structured vectors from the input feature vectors 404, $[X_p]$.

In some embodiments, a layer code prediction is an output from a layer model defined within a hierarchical layer. A layer code prediction may depend on the form of the layer model. For example, a layer code prediction may include a deterministic output, a probabilistic output, and/or the like. A probabilistic output, for example, may indicate a likelihood (e.g., a ratio, percentage, etc.) of a particular code. A deterministic output may include multi-label vector (e.g., including a binary indicator for each of subset of codes). In some examples, a layer code prediction may include a confidence score associated with the probabilistic and/or deterministic output. In some examples, a layer code prediction may include a confidence score for each label of a multi-label vector.

In some embodiments, layer code predictions are input to a layer metamodel training stage 616 of the multi-layered machine learning model 440 to generate intermediate code predictions for one or more codes of the plurality of codes. For example, the one or more first layer code predictions may be input to the first layer metamodel 420 to generate one or more first intermediate code predictions. The first layer metamodel 420, for example, may be trained to generate the first intermediate code predictions by synthesizing the plurality of first layer code predictions. In some examples, the first layer metamodel 420 may be trained to generate the first intermediate code predictions by synthesizing the plurality of first layer code-specific predictions for each of the one or more codes of the first layer.

In addition, or alternatively, the one or more second layer code predictions may be input to the second layer metamodel 422 to generate one or more second intermediate code predictions, one or more third layer code predictions may be input to the third layer metamodel 424 to generate one or more third intermediate code predictions, and/or the like. In some examples, the second layer metamodel 422 may be trained to generate the second intermediate code predictions by synthesizing the plurality of second layer code-specific predictions for each of the one or more codes of the second layer. In some examples, the third layer metamodel 424 may be trained to generate the third intermediate code predictions by synthesizing the plurality of third layer code-specific predictions for each of the one or more codes of the third layer.

In some examples, a layer metamodel may receive a plurality of layer code predictions from its respective layer and each of the hierarchical layers preceding the layer metamodel within the multi-layered machine learning model 440. For example, (a) one or more first layer code predictions, (b) one or more second layer code predictions, and (c) one or more first intermediate code predictions may be input to the second layer metamodel 422 of the multi-layered machine learning model 440 to generate one or more second intermediate code predictions for one or more codes of the plurality of codes. The second layer metamodel 422, for example, may be trained to generate the second intermediate code predictions by synthesizing the plurality of first layer code predictions, the plurality of second layer code predictions, and/or the first intermediate code prediction.

As another example, (a) one or more first layer code predictions, (b) one or more second layer code predictions, (c) one or more third layer code predictions, (d) one or more first intermediate code predictions, and (e) one or more second intermediate code predictions may be input to the third layer metamodel 424 of the multi-layered machine learning model 440 to generate one or more third intermediate code predictions for one or more codes of the plurality of codes. The third layer metamodel 424, for example, may be trained to generate the third intermediate code predictions by synthesizing the plurality of first layer code predictions, the plurality of second layer code predictions, the plurality of third layer code predictions, the first intermediate code predictions, and the second intermediate code predictions.

In some embodiments, a layer metamodel is an aggregation model within a hierarchical layer. A layer metamodel may be a data entity that describes parameters, hyper-parameters, and/or defined operations of a rules-based and/or machine learning model (e.g., model including at least one of one or more rule-based layers, one or more layers that depend on trained parameters, coefficients, and/or the like). A layer metamodel may include any type of model configured, trained, and/or the like to generate an intermediate code prediction for an entity data object. A layer metamodel may include one or more of any type of machine learning model including one or more supervised, unsupervised, semi-supervised, reinforcement learning models, and/or the like. In some examples, the layer metamodel may include a machine learning model, such as a neural network, random forest model, naive bayes classifier, support vector machine, and/or any other machine learning text-based classifier.

A layer metamodel (L-Meta) may be positioned after the layer models in a particular hierarchical layer and may be configured and/or trained synthesize intermediate code predictions from the outputs of (i) the layer models within the hierarchical layer and (ii) the outputs of layer models and/or metamodels from preceding hierarchical layers of the multi-layered machine learning model 440. A layer metamodel may include one or more machine learning models, such as classification-based ensemble models (e.g., random forest, XGBoost, regression models, etc.), and/or the like, that may be trained and/or configured to generate probabilistic outputs (e.g., between 0 and 1) from a plurality of model outputs. By way of example, a layer metamodel may receive outputs from the layer models and process them to infer patterns, relationships, and potential correlations. The resultant intermediate code predictions may be provided as input for subsequent metamodels, setting up a hierarchical flow of information.

In some examples, each hierarchical layer of the multi-layered machine learning model 440 may include a layer metamodel (e.g., models (K, L, A)). A metamodel may implement an MoE approach to synthesize probabilistic data and multi-label vectors into intermediate code predictions. The layer metamodel may receive inputs from the layer models within its hierarchical layer and prior layer metamodels. For instance, in a three-layer example, (i) a first layer metamodel 420 (K metamodel) associated with a first hierarchical layer may receive a plurality of first layer code predictions from the first layer models 408A-C within the first hierarchical layer, (ii) a second layer metamodel 422 (L metamodel) associated with a second hierarchical layer may receive (a) a plurality of second layer code predictions from the second layer models 412A-C within the second hierarchical layer and (b) a plurality of first intermediate code predictions from the first layer metamodel 420 (K metamodel), and (iii) a third layer metamodel 424 (A metamodel) associated with a third hierarchical layer may receive (a) a plurality of third layer code predictions from the third layer models 416A-C within the third hierarchical layer, (b) a plurality of first intermediate code predictions from the first layer metamodel 420 (K metamodel), and (c) a plurality of second intermediate code predictions from the second layer metamodel 422 (L metamodel). This allows for hierarchical information flow, where high frequency model layers may provide information to large code space metamodels.

In some embodiments, a type of layer metamodel may depend on the hierarchical layer. By way of example, a first layer metamodel 420 may include an attention-based metamodel. In addition, or alternatively, a second layer metamodel 422 may include supervised machine learning classification model. As another example, a third layer metamodel 424 may include a rule-based model.

In addition, or alternatively, the multi-layered machine learning model 440 may define a plurality of residual connections 418 between the layer models in a hierarchical layer and the layer metamodels in subsequent hierarchical layers. In this manner, (i) a second layer metamodel 422 (L metamodel) associated with a second hierarchical layer 508 may receive a plurality of first layer code predictions from the first layer models 408A-C within the first hierarchical layer and (ii) a third layer metamodel 424 (A metamodel) associated with a third hierarchical layer may receive (a) a plurality of first layer code predictions from the first layer models 408A-C within the first hierarchical layer, and (b) a plurality of second layer code predictions from the second layer models 412A-C within the second hierarchical layer. This ensures that each layer metamodel has access to data from its specific layer outputs, outputs from preceding layer metamodels, and individual model predictions from earlier layers. This allows for a more wide-ranging field of view of the layer metamodels for code output.

In some embodiments, an intermediate code prediction is an output from a layer metamodel defined within a hierarchical layer. An intermediate code prediction may depend on the form of the layer model defined within the hierarchical layer. For example, an intermediate code prediction may include a deterministic output, a probabilistic output, and/or the like that is selected from a plurality of layer code predictions. In addition, or alternatively, an intermediate code prediction may include probabilistic value (e.g., between 0 and 1) that synthesizes a plurality of layer code predictions (e.g., output from current layer models or preceding layer models) and/or preceding intermediate code predictions.

In some examples, an intermediate code prediction may include a value (e.g., probabilistic value, deterministic value, etc.) for a particular code of a subset of codes associated with a hierarchical layer. In some examples, layer metamodel for a particular hierarchical layer may generate one intermediate code prediction for each code of the subset of codes associated with the particular hierarchical layer. By way of example, (i) a first layer metamodel 420 (K metamodel) associated with a first hierarchical layer may output a plurality of intermediate code predictions respectively corresponding to a first plurality of codes of a first designated code subset for the first hierarchical layer, (ii) a second layer metamodel 422 (L metamodel) associated with a second hierarchical layer may output a plurality of intermediate code predictions respectively corresponding to a second plurality of codes of a second designated code subset for the second hierarchical layer, and (iii) a third layer metamodel 424 (A metamodel) associated with a third hierarchical layer may output a plurality of intermediate code predictions respectively corresponding to a third plurality of codes of a third designated code subset for the third hierarchical layer

In some embodiments, a plurality of intermediate outputs is input to the fusion model 428 of the multi-layered machine learning model 440 to generate a plurality of fused code predictions for the plurality of codes. In some examples, the plurality of intermediate outputs may include the layer code predictions and the intermediate code predictions output at each hierarchical layer of the multi-layered machine learning model 440. The plurality of intermediate outputs, for example, may include the first intermediate code predictions, (b) the second intermediate code predictions, (c) the third intermediate code predictions, and/or the like. In some examples, the intermediate outputs may include contextual data for each of the predictions, including code-level performance metric scores. The code-level performance metric scores, for example, may include first code-level performance metric scores identifying a first accuracy of a first layer model 408A with respect to a code, a second code-level performance metric score identifying a second accuracy of the second layer model 412A with respect to a code, and/or the like. In some examples, the fused code prediction is based on a modulating factor associated with a frequency metric corresponding to each of the plurality of codes.

In some embodiments, a code-level performance metric score is a performance metric of a layer model defined within the multi-layered machine learning model 440. For example, a code-level performance metric score may include one or more performance metrics for a layer model that are determined during a validation stage of a training process. A code-level performance metric score may include a F1-score, precision score, recall score, accuracy, and/or the like. Each code-level performance metric score may correspond to a particular layer model and a code. In this way, each code-level performance metric score may identify a layer model's performance with respect to an individual code.

In some embodiments, the fusion model 428 is an aggregation model for each hierarchical layer of the multi-layered machine learning model 440. A fusion model 428 may be a data entity that describes parameters, hyper-parameters, and/or defined operations of a rules-based and/or machine learning model (e.g., model including at least one of one or more rule-based layers, one or more layers that depend on trained parameters, coefficients, and/or the like). The fusion model 428 may include a final fusion layer of the multi-layered machine learning model 440 that synthesizes (e.g., fuses) model outputs from each hierarchical layer (e.g., including the layer and metamodels thereof) of the multi-layered machine learning model 440. For example, the fusion model 428 may receive, as input, a plurality of layer code predictions and a plurality of intermediate code predictions from each of the hierarchical layers of the multi-layered machine learning model 440. In some examples, the fusion model 428 may include a structured boosting mechanism that may leveraged to modulate the plurality of layer code predictions based on at least one of a model confidence and/or a code-level performance metric score associated with each layer code prediction. In some examples, the structured boosting mechanism may be optimized using Bayesian optimization, particle swarm optimization, and/or the like. The fusion model 428 may apply the structured boosting mechanism (and/or a gating mechanism) to synthesize the plurality of inputs (e.g., layer code predictions and intermediate code predictions) into a plurality of fused code predictions. The fused code predictions, for example, may include a fused code prediction for each code defined within a target coding domain.

In some examples, the structured boosting mechanism may modulate layer code predictions, such as $P1_C$, $P2_C$ (from probabilistic models) and a deterministic predictions P3c (e.g., from the S-AI NLP model), based on a code-level performance metric score ($F1_C$, $F2_C$, $F3_C$) that corresponds to the code (C) and the layer model associated with the layer code prediction. In some examples, an aggregate probability $P_C$ for the code C may be generated by:

$$P_C = \frac{(P1_C \ x \ F1_C) + (P2_C \ x \ F2_C)}{F1_C + F2_c}$$

In some examples, the Pc may be adjusted/influenced by the deterministic prediction P3c. This is achieved through a modulating factor $\alpha$, which may vary based on the frequency metric associated with the code, C. For example, if P3c is 1 (indicating a positive prediction for the label), the influence may be additive:

$$P_C = P_C + \alpha \ x \ P_c \ x \ F3_c$$

In addition, or alternatively, if P3c is 0 (indicating a negative prediction for the label), the influence may be subtractive:

$$P_C = P_C \ - \ \alpha \ x \ P_c \ x \ F3_c$$

In this way, a modulating factor $\alpha$ may dynamically adjust output based on an expected level of trust for a prediction of a code. The value of $\alpha$ may be determined through optimization techniques, or, alternatively, derived from the frequency metrics (and/or other attributes, such as factors like prediction confidence, data source reliability, recent model performance, etc.) for a code. For instance, $\alpha$ may be small for high-frequency labels (indicating greater trust in the probabilistic models) and larger for low-frequency labels. In some examples, an inverse frequency distribution curve be leveraged to generate the modulating factor $\alpha$.

In some embodiments, a fused code prediction is an output from a fusion model 428. A fused code prediction, for example, may be a probabilistic output from a fusion model 428 of the multi-layered machine learning model 440 that synthesizes layer and intermediate predictions from each hierarchical layer of the multi-layered machine learning model 440. In some examples, the fusion model 428 of the multi-layered machine learning model 440 may output a fused code prediction for each code defined within a target coding domain.

In some embodiments, a model prediction 430 is output for one or more of the plurality of codes based on the fused code predictions. In some embodiments, a model prediction 430 is an output from the multi-layered machine learning model 440. A model prediction 430 may be a deterministic output from the multi-layered machine learning model 440 that is based on a fused code prediction. In some examples, the multi-layered machine learning model 440 may output a model prediction 430 for each code defined within a target coding domain. In some examples, the model predictions may include binary labels for each of the code identifying if a code is predicted to correspond (e.g., a "1") to an input data object 402 or the code is predicted to not correspond (e.g., a "0") the input data object 402. In some examples, the multi-layered machine learning model 440 may output a set of codes associated with model prediction identifying that that codes are predicted to correspond (e.g., a "1") to the input data object 402. By way of example, a concluding output from the multi-layered machine learning model 440 may represent the predicted codes for the input data object 402. In this way, the multi-layered machine learning model 440 may output a set of codes (e.g., computer performance codes, medical codes, etc.) that are inferred from an input data object 402 without an express indication of the codes within the input data object 402.

In this manner, a multi-layered machine learning model 440 may synthesize outputs from a plurality of component models to generate a comprehensive autonomous coding output for robust target coding domains.

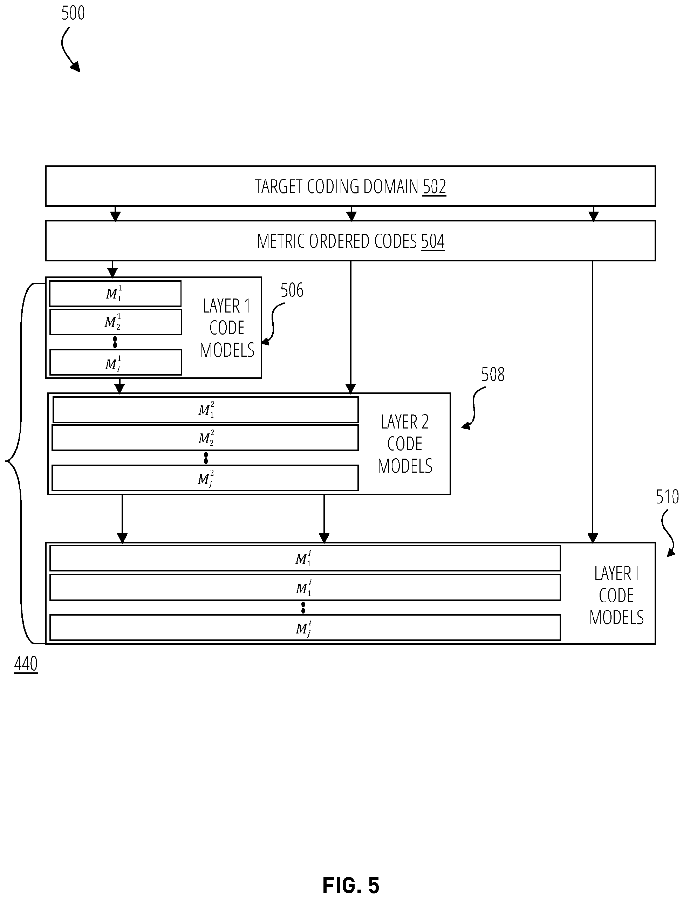

Unlike traditional model architectures, the multi-layered machine learning model 440 may assess each of a plurality of codes within the target coding domain without information loss or reductions in accuracy to component models. In some examples, these performance increases may be further enhanced through hierarchical separation techniques of the various layers of the multi-layered machine learning model 440, which will be described in further detail with reference to FIG. 5.

FIG. 5 is an operational example 500 of a hierarchical framework for a multi-layered machine learning model in accordance with some embodiments of the present disclosure. A multi-layered machine learning model 440 may define a plurality of hierarchical layers to at least partially separate a plurality of models into different layer model ensembles with increase performance for a particular aspect of an autonomous coding process. By way of example, the hierarchical layers may divide the plurality of models based on a granularity of predictions produced by the models, such that models that produce outputs of higher granularity may be organized in a first hierarchical layer 506 and models that produce outputs of less granularity may be organized in the third hierarchical layer 510. In this manner, outputs of higher granularity may be fed upward, through the hierarchical layers, to inform more generalized approaches. Ultimately, this improves model performance by allowing information sharing without degrading the performance of high performing models within an ensemble.

In some embodiments, a target coding domain 502 is a prediction space in which a plurality of codes is defined. A target coding domain 502 may include any domain in which codes are used to capture an actionable insight. For example, a target coding domain 502 may be a computer performance monitoring domain that leverages a plurality of codes to identify defined computing activities, defects, and other features predictive of a computer's performance. Other examples of target coding domains 502 may include healthcare domains, business domains, financial domains, and/or the like. As an example, a healthcare domain may leverage a systematic coding of medical procedures and diagnoses for managing the health of participants within a healthcare system. These, healthcare codes, may include Current Procedural Terminology (CPT), Clinical Modification (CM), Procedure Coding System (PCS) codes, and/or the like that may be assigned to a participant based on the participant's activity within the healthcare domain (e.g., as reflected by a medical chart, etc.). CM codes, for example, may include a set of codes developed and maintained by the World Health Organization (WHO) that offers a system for classifying diseases, with detailed categorization of various signs, symptoms, abnormal findings, complaints, social circumstances, and external causes of injury or disease. CPT codes may include another set of codes developed by another agency (e.g., the American Medical Association) that include alphanumeric characters utilized by healthcare providers to document procedures and services performed during a healthcare visit. PCS codes may include yet another set of codes developed and maintained by yet another agency for classifying medical procedures and diagnoses.

Coding domains with disparate sets of codes managed by third parties, such as the healthcare example above, present several technical challenges to autonomous coding systems due to the intricate and variable nature of coding languages that may differ across agencies and coding systems. Some embodiments of the present disclosure address these technical challenges by presenting the multi-layered machine learning model that is tailored to the target coding domain 502 502. As described herein, the multi-layered machine learning model 440 may be trained, configured, and/or the like to receive an input data object and, responsive to the input data object, output a plurality of code predictions reflective of codes that are predicted to correspond to the input data object. By doing so, one multi-layered machine learning model 440 may extract a set of relevant codes from a target coding domain 502 for an input data object to provide actionable insights that are defined by various disparate entities within the domain.

In some embodiments, a multi-layered machine learning model 440 includes a plurality of hierarchical layers that decrease in granularity. For example, the plurality of hierarchical layers may include three layers (e.g., first hierarchical layer 506, second hierarchical layer 508, third hierarchical layer 510, etc.) for the target coding domain 502. A first hierarchical layer 506 may process an input data object and output predictions for a first subset of codes from the target coding domain 502. The first subset of codes may include a set of most frequently used codes that are associated with sufficient training data to generate granular predictions. A second hierarchical layer 508 may process the input data object and output predictions for a second subset of codes from the target coding domain 502. The second subset of codes may include the set of most frequently used codes and additional codes that are associated with limited training data to generate predictions of less granularity than the first hierarchical layer 506. A third hierarchical layer 510 may process the input data object and output predictions for all of the codes defined within the target coding domain, including codes with minimal training data. At each current layer, outputs from the preceding layers may be transferred, through residual connections, to the models of the current layer. In this way, models trained for less granular predictions may leverage insights from the previous layers to improve predictions for rare, less frequent, and difficult to predict codes, without degrading predictions for frequent, easier to predict codes.

In some embodiments, a hierarchical layer is a portion (e.g., layer) of a multi-layered machine learning model 440 with a defined hierarchical relationship to other portions (e.g., layers) of the multi-layered machine learning model 440. In some examples, a hierarchical layer may include two sublayers, a prediction layer and an aggregate layer. The prediction layer may include a plurality of layer models configured for a particular set of codes from a plurality of codes within a target coding domain 502. The aggregate layer may include a layer metamodel configured to aggregate a plurality of predictions output by the plurality of layer models. Each sublayer of a hierarchical layer may be connected, through a plurality of residual connections, to the sublayers of a preceding hierarchical layers and a subsequent hierarchical layers. In this way, each sublayer may leverage insights from the preceding hierarchical layers and pass on insights to the subsequent hierarchical layers.

A number of hierarchical layers defined by a multi-layered machine learning model 440 may be domain specific. A multi-layered machine learning model 440, for example, may define two, three, ten, twenty, and/or any other number of layers. In some examples, the number of hierarchical layers may be based on one or more code-level attributes for each code defined within a target coding domain 502. For instance, the number of layers may be based on a frequency metric associated with each of the plurality of codes. By way of example, each of the hierarchical layers may be defined based on a relative frequency threshold. In other examples, each of the hierarchical layers may be defined based on attributes, such as data source, provider, data age, code categories, and/or any other shared attribute impacting predictions for a set of codes. In some examples, instead of static layers, the multi-layered machine learning model 440 may employ a dynamic layer generation model that dynamically adjusts layers on-the-fly depending on incoming data patterns.

In some examples, each layer model of the multi-layered machine learning model 440 may be configured and/or trained for one or more codes from a specific subset of codes corresponding to a respective hierarchical layer. In some examples, the specific subset of codes for each hierarchical layer may be based on frequency metrics for a plurality of codes. For instance, a first layer model associated with a first hierarchical layer 506 may be configured and/or trained for a first plurality of codes (e.g., fifty most frequent codes, etc.), a second layer model associated with a second hierarchical layer 508 may be configured and/or trained for a second plurality of codes (e.g., one hundred most frequent codes, etc.), a third layer model associated with a third hierarchical layer 510 may be configured and/or trained for a third plurality of codes (e.g., two hundred most frequent codes, etc.), and/or the like. The code distribution of the layers is done in order to provide more complex models a finite label space to operate in and understand the generalizable patterns for coding. The different models in a layer may be configured for one or a plurality of different modalities (e.g., natural language text, structured text, image, code, etc.).

In some examples, the multi-layered machine learning model may include a three-layer model with a fusion layer. The three layers may include (i) a first hierarchical layer 506 with one or more first layer model configured and/or trained for K-high frequency codes, (ii) a second hierarchical layer with one or more second layer models 412A configured and/or trained for a large code space (e.g., including 98% distribution of codes), and (iii) a third hierarchical layer 510 with one or more third layer models configured and/or trained for the entire target coding domain 502.

In some embodiments, a frequency metric is a code level metric that reflects a recorded number of code occurrences within a plurality of data objects. A frequency metric, for example, may identify a total number of code occurrences (e.g., presence of a code within a data object) across a plurality of historical data objects. In addition, or alternatively, a frequency metric may identify a code occurrence percentile, ratio, and/or any other value reflective of a relative frequency of a code within a plurality of historical data objects. In some examples, one or more machine learning models of the present disclosure may be trained using the plurality of historical data objects as training entries in a training dataset. In some examples, a code occurrence may be used as a ground truth label for labeling the training entries. In this way, high frequency codes (e.g., associated with a greater number of code occurrences relative to other codes) may be associated with a larger training dataset relative to low frequency codes (e.g., associated with a lower number of code occurrences relative to other codes).

In some embodiments, a relative frequency threshold is a minimum frequency metric of a hierarchical layer. A relative frequency threshold, for example, may identify a code boundary for a hierarchical layer. In some examples, a relative frequency threshold may define a threshold frequency metric, such as a threshold number of code occurrences, a threshold occurrence ratio, and/or the like. In addition, or alternatively, a relative frequency threshold may be defined based on a threshold number of codes for particular hierarchical layer. For instance, a first hierarchical layer 506 may define a threshold number of 100 hundred codes. In such a case, the relative frequency threshold may include the $100^{th}$ highest frequency metric from a plurality of frequency metrics respectively corresponding to the plurality of codes within a target coding domain 502.

In some embodiments, the layer models of a first hierarchical layer 506 generate a plurality of first layer code predictions based on one or more input feature vectors. The plurality of first layer code predictions may respectively correspond to a first plurality of codes from the plurality of codes defined within the target coding domain 502. In some examples, the first plurality of codes may be respectively associated with a plurality of first frequency metrics that achieve a first relative frequency threshold for the first layer models. By way of example, the target coding domain 502 may include a plurality of codes that may be ordered based on one or more metrics to generate a metric ordered codes 504. The first plurality of codes of the first hierarchical layer 506 may include a first subset of codes from the metric ordered codes 504.

In some embodiments, the layer models of a second hierarchical layer 508 generate a plurality of second layer code predictions based on the one or more input feature vectors. The plurality of second layer code predictions may respectively correspond to a second plurality of codes from the plurality of codes defined within the target coding domain 502. In some examples, the second plurality of codes may be respectively associated with a plurality of second frequency metrics that achieve a second relative frequency threshold for the second layer models. By way of example, the second plurality of codes of the second hierarchical layer 508 may include a second subset of codes from the metric ordered codes 504. In some examples, the first relative frequency threshold may be lower than the second relative frequency threshold and the second plurality of codes may include the first plurality of codes and a plurality of additional codes.

In some embodiments, the layer models of a third hierarchical layer 510 generate a plurality of third layer code predictions based on the one or more input feature vectors. The plurality of third layer code predictions may respectively correspond to a third plurality of codes from the plurality of codes defined within the target coding domain 502. In some examples, the third plurality of codes may be respectively associated with a plurality of third frequency metrics that achieve a third relative frequency threshold for the third layer models. By way of example, the third plurality of codes of the third hierarchical layer 510 may include a third subset of codes from the metric ordered codes 504. In some examples, the first relative frequency threshold and the second relative frequency threshold may be lower than the third relative frequency threshold and the third plurality of codes may include the first and second pluralities of codes and a plurality of additional codes.

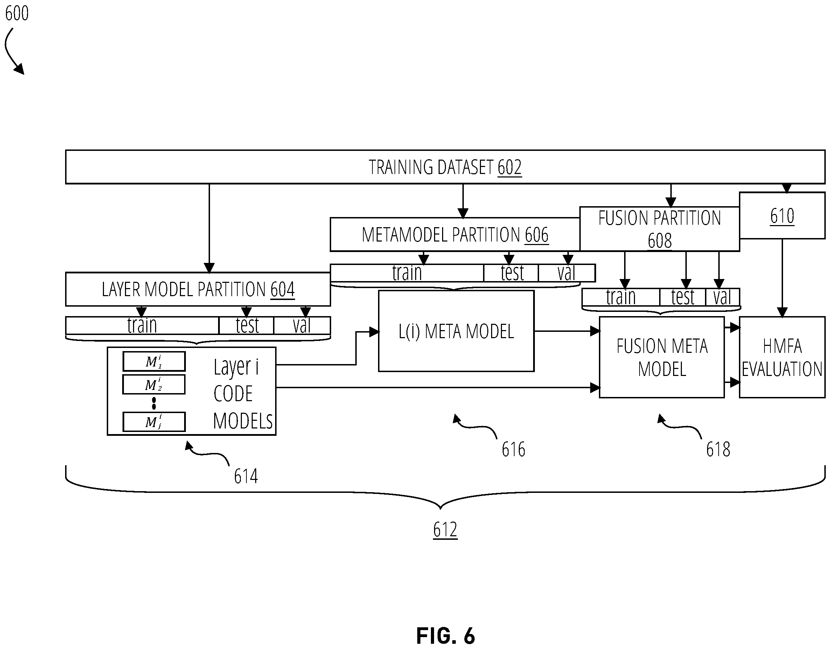

FIG. 6 is an operational example 600 of a staged training technique in accordance with some embodiments of the present disclosure. The staged training technique 612 includes a plurality of training stages in which portions of a multi-layered machine learning model 440 may be independently and/or jointly trained. At each stage of the staged training technique, a set of models may be trained using a partition from a training dataset 602. Each training stage may independently train, test, and validate each of a plurality of models within the second layer model ensemble 410. By doing so, the staged training technique may generate a plurality of code-level performance metric scores (and/or other performance metrics) that may be fed to later training stages to improve to performance of models trained in the later stages.

By way of example, a staged training technique may include (i) a layer model training stage 614 in which layer models are trained using a layer model partition 604 from a training dataset 602, (ii) a layer metamodel training stage 616 training stage in which metamodels are trained using a metamodel partition 606 from the training dataset 602, and (iii) a fusion model 428 in which a fusion model is trained using a fusion partition 608 from the training dataset 602. In some examples, performance metrics may be fed from the layer model training stage 614 to the layer metamodel training stage 616 and fusion model training stage 618. In addition, or alternatively, performance metrics may be fed from the layer model training stage 614 and the layer metamodel training stage 616 to the fusion model training stage 618. In some examples, these performance metrics may be retained for use during inference, as described herein. In this way, the staged training technique may improve the performance of machine learning training techniques by modifying models, during a training phase, to account for and counteract an expected model performance.

In some embodiments, the multi-layered machine learning model is trained by applying the staged training technique to the multi-layered machine learning model. The staged training technique includes individually training at least a portion of the layer models (e.g., during the layer model training stage 614), freezing one or more layer weights of the at least the portion of the layer models, and individually training the layer metamodel (e.g., during the layer metamodel training stage 616) using a plurality of layer training outputs from the layer models. In addition, or alternatively, the staged training technique may include freezing one or more meta weights of the layer metamodels and training the fusion model (e.g., during the fusion model training stage 618) using the plurality of layer training outputs from the layer model and a plurality of meta training outputs from the layer metamodels.

In some embodiments, the staged training technique is a sequential training process for training a multi-layered machine learning model. The staged training technique, for example, may include a plurality of stages. During each stage, one or more different models may be trained through one or more model training operations (e.g., back-propagation of errors, gradient descent, etc.). In some examples, during each stage, a plurality of models may be trained across each of the hierarchical layers of the multi-layered machine learning model. Each model (e.g., layer model, layer metamodel, etc.) may be trained using a layer-specific training dataset corresponding to the hierarchical layer in which the model resides. For example, each hierarchical layer may be associated with a labeled training dataset that includes a plurality of labelled training entries corresponding to the designation code subset of the hierarchical layer.

In some examples, during a first stage (e.g., layer model training stage 614), a plurality of layer models for each hierarchical layer of the multi-layered machine learning model may be individually trained using the training sets corresponding to their respective hierarchical layers. In a second stage (e.g., layer metamodel training stage 616), the learned weights of the plurality of layer models may be frozen and the plurality of layer metamodels for each hierarchical layer of the multi-layered machine learning model may be trained using the training sets corresponding to their respective hierarchical layers and the outputs from the frozen layer models. In a third stage (e.g., fusion model training stage 618, the learned weights of the plurality of layer models and the plurality of metamodels may be frozen and the fusion model may be trained using the training set from the last hierarchical layer and the model outputs from each of the frozen layer and metamodels.

In some examples, the models of the multi-layered machine learning model may be trained using data partitions from a plurality historical data objects. In some examples, the data partitioning mechanism may partition the historical data objects into - 1) layer model partition 604, 2) metamodel partition 606, 3) fusion partition 608, and 4) validation partition 610. The layer model partition 604 may be used to train and evaluate the layer models ( $M_i^k$ ).). The metamodel partition 606 may be used to train and evaluate the metamodels (K, L, A). The fusion partition 608 may be used to train and evaluate the fusion model. The validation partition 610 may be used to validate the multi-layered machine learning model's end-to-end operation. The layer model partition 604, metamodel partition 606, and fusion partition 608 may be divided into train, test and validation datasets.

In some embodiments, the multi-layered machine learning model is iteratively trained and retrained based on received historical data objects to prevent inaccuracies due to data drift. For example, an iterative approach may be applied to continually refine weights as more data is processed and/or as models are updated within the multi-layered machine learning model.

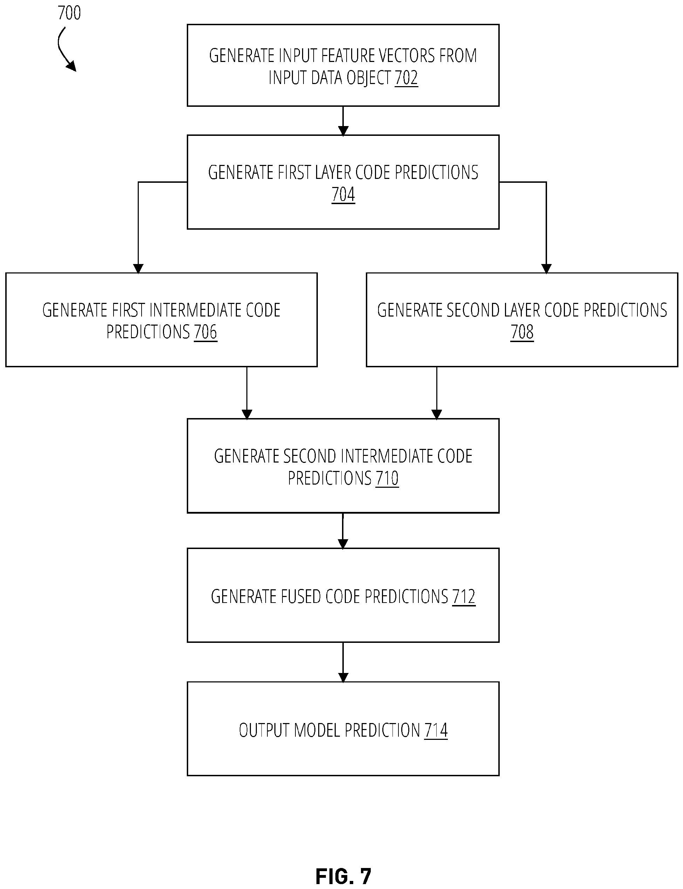

FIG. 7 is a flowchart diagram of an example process 700 for implementing a multi-layered autonomous coding framework in accordance with some embodiments of the present disclosure. The flowchart depicts a multi-layered processing technique that leverages a multi-layered machine learning model to autonomously code an input data object without user feedback. The process 700 may be implemented by one or more computing devices, entities, and/or systems described herein. For example, via the various steps/operations of the process 700, the computing system 101 may leverage improved machine learning architectures and training techniques to implement a multi-layered, autonomous model to interpret, extract, and synthesize codes from various input modalities. By doing so, the process 700 provides improvements to machine learning technology that may applied in various technical fields, such as autonomous coding, etc., to improve the functionality of computer.

FIG. 7 illustrates an example process 700 for explanatory purposes. Although the example process 700 depicts a particular sequence of steps/operations, the sequence may be altered without departing from the scope of the present disclosure. For example, some of the steps/operations depicted may be performed in parallel or in a different sequence that does not materially impact the function of the process 700. In other examples, different components of an example device or system that implements the process 700 may perform functions at substantially the same time or in a specific sequence.

In some embodiments, the process 700 includes, at step/operation 702, generating an input feature vector from an input data object. For example, the computing system 101 may generate an input feature vector from the input data object.

In some embodiments, the process 700 includes, at step/operation 704, generating a first layer code prediction. For example, the computing system 101 may input an input feature vector to a first layer model of a multi-layered machine learning model to generate a first layer code prediction for a code of a plurality of codes defined within a target coding domain. In some examples, the first layer code prediction for the code is one of a plurality of first layer code predictions generated by the first layer model based on the input feature vector. In some examples, the plurality of first layer code predictions respectively corresponds to a first plurality of codes from the plurality of codes defined within the target coding domain. The first plurality of codes may be respectively associated with a plurality of first frequency metrics that achieve a first relative frequency threshold for the first layer model. In some examples, the first layer model may include a first layer model ensemble. The first layer code prediction for the code may be one of a plurality of first layer code-specific predictions for the code is output by the first layer model ensemble based on the input feature vector. In some examples, plurality of first layer code-specific predictions may include a deterministic prediction and/or a probabilistic prediction.

In some embodiments, the process 700 includes, at step/operation 706, generating a first layer intermediate code prediction. For example, the computing system 101 may input the first layer code prediction to a first layer metamodel of the multi-layered machine learning model 440 to generate a first intermediate code prediction for the code. In some examples, the first layer metamodel is trained to generate the first intermediate code prediction by synthesizing the plurality of first layer code predictions. In some examples, the first layer metamodel is trained to generate the first intermediate code prediction by synthesizing the plurality of first layer code-specific predictions.

In some embodiments, the process 700 includes, at step/operation 708, generating a second layer code prediction. For example, the computing system 101 may input the input feature vector to a second layer model of the multi-layered machine learning model to generate a second layer code prediction for the code. In some examples, the second layer code prediction for the code is one of a plurality of second layer code predictions generated by the second layer model based on the input feature vector. In some examples, the plurality of second layer code predictions may respectively correspond to a second plurality of codes from the plurality of codes defined within the target coding domain. The second plurality of codes may be respectively associated with a plurality of second frequency metrics that achieve a second relative frequency threshold for the second layer model.

In some examples, the first relative frequency threshold may be lower than the second relative frequency threshold and the second plurality of codes may include the first plurality of codes and plurality of additional codes.

In some embodiments, the process 700 includes, at step/operation 710, generating a second intermediate code prediction. For example, the computing system 101 may (a) the first layer code prediction, (b) the second layer code prediction, and (c) the first intermediate code prediction to second layer metamodel of the multi-layered machine learning model to generate a second intermediate code prediction for the code. In some examples, the second layer metamodel may be trained to generate the second intermediate code prediction by synthesizing the plurality of first layer code predictions, the plurality of second layer code predictions, and the first intermediate code prediction.

In some embodiments, the process 700 includes, at step/operation 712, generating a fused code prediction. For example, the computing system 101 may input a plurality of intermediate outputs including (a) the first intermediate code prediction, (b) the second intermediate code prediction, (c) a first code-level performance metric score identifying a first accuracy of the first layer model with respect to the code, and (d) a second code-level performance metric score identifying a second accuracy of the second layer model with respect to the code, to a fusion model of the multi-layered machine learning model to generate a fused code prediction for the code. In some examples, the fused code prediction is based on modulating factor associated with a frequency metric corresponding to the code.

In some examples, the multi-layered machine learning model may be trained by applying a staged training technique to the multi-layered machine learning model. The staged training technique may include individually training at least a portion of the first layer model, freezing one or more layer weights of the at least the portion of the first layer model, and then individually training the first layer metamodel using a plurality of layer training outputs from the first layer model.

In addition, or alternatively, the staged training technique may include freezing one or more meta weights of the first layer metamodel and training the fusion model using the plurality of layer training outputs from the first layer model and a plurality of meta training outputs from the first layer metamodel.

In some embodiments, the process 700 includes, at step/operation 714, outputting model predictions. For example, the computing system 101 may output a model prediction for the code based on the fused code prediction.

Some techniques of the present disclosure enable the generation of action outputs that may be performed to initiate one or more real world actions to achieve real-world effects. The techniques of the present disclosure may be used, applied, and/or otherwise leveraged to extract codes reflective of actionable insights that may depend on target coding domain. These actionable insights, for example, may trigger action outputs (e.g., through control instructions, etc.) to automate computer performance action, clinical actions, and/or the like. The action outputs may control various aspects of a client device, such as the display, transmission, and/or the like of data reflective of codes, etc. In some embodiments, codes may trigger an alert, and/or the like. The alert may be automatically communicated to a user and/or be used to initiate a security protocol (e.g., locking a computer, etc.), a robotic action (e.g., performing an automated screening process, etc.), and/or the like.

In some examples, the computing tasks may include actions that may be based on a target coding domain. A target coding domain may include any environment in which computing systems may be applied to interpret, store, and process data and initiate the performance of computing tasks responsive to the data. These actions may cause real-world changes, for example, by controlling a hardware component, providing alerts, interactive actions, and/or the like. For instance, actions may include the initiation of automated instructions across and between devices, automated notifications, automated scheduling operations, automated precautionary actions, automated security actions, automated data processing actions, and/or the like.

## VI. Conclusion

Many modifications and other embodiments will come to mind to one skilled in the art to which the present disclosure pertains having the benefit of the teachings presented in the foregoing descriptions and the associated drawings. Therefore, it is to be understood that the present disclosure is not to be limited to the specific embodiments disclosed and that modifications and other embodiments are intended to be included within the scope of the appended claims. Although specific terms are employed herein, they are used in a generic and descriptive sense only and not for purposes of limitation.

## VII. Examples

Some embodiments of the present disclosure may be implemented by one or more computing devices, entities, and/or systems described herein to perform one or more example operations, such as those outlined below. The examples are provided for explanatory purposes. Although the examples outline a particular sequence of steps/operations, each sequence may be altered without departing from the scope of the present disclosure. For example, some of the steps/operations may be performed in parallel or in a different sequence that does not materially impact the function of the various examples. In other examples, different components of an example device or system that implements a particular example may perform functions at substantially the same time or in a specific sequence.

Moreover, although the examples may outline a system or computing entity with respect to one or more steps/operations, each step/operation may be performed by any one or combination of computing devices, entities, and/or systems described herein. For example, a computing system may include a single computing entity that is configured to perform all of the steps/operations of a particular example. In addition, or alternatively, a computing system may include multiple dedicated computing entities that are respectively configured to perform one or more of the steps/operations of a particular example. By way of example, the multiple dedicated computing entities may coordinate to perform all of the steps/operations of a particular example.

Example 1. A computer-implemented method comprising inputting, by one or more processors, an input feature vector to a first layer model of a multi-layered machine learning model to generate a first layer code prediction for a code of a plurality of codes defined within a target coding domain; inputting, by the one or more processors, the first layer code prediction to a first layer metamodel of the multi-layered machine learning model to generate a first intermediate code prediction for the code; inputting, by the one or more processors, the input feature vector to a second layer model of the multi-layered machine learning model to generate a second layer code prediction for the code; inputting, by the one or more processors, (a) the first layer code prediction, (b) the second layer code prediction, and (c) the first intermediate code prediction to second layer metamodel of the multi-layered machine learning model to generate a second intermediate code prediction for the code; inputting, by the one or more processors, a plurality of intermediate outputs comprising (a) the first intermediate code prediction, (b) the second intermediate code prediction, (c) a first code-level performance metric score identifying a first accuracy of the first layer model with respect to the code, and (d) a second code-level performance metric score identifying a second accuracy of the second layer model with respect to the code, to a fusion model of the multi-layered machine learning model to generate a fused code prediction for the code; and outputting, by the one or more processors, a model prediction for the code based on the fused code prediction.

Example 2. The computer-implemented method of example 1, wherein the fused code prediction is based on modulating factor associated with a frequency metric corresponding to the code.

Example 3. The computer-implemented method of any of the preceding examples, wherein (i) the first layer code prediction for the code is one of a plurality of first layer code predictions generated by the first layer model based on the input feature vector, (ii) the plurality of first layer code predictions respectively corresponds to a first plurality of codes from the plurality of codes defined within the target coding domain, and (iii) the first plurality of codes is respectively associated with a plurality of first frequency metrics that achieve a first relative frequency threshold for the first layer model.

Example 4. The computer-implemented method of example 3, wherein (i) the second layer code prediction for the code is one of a plurality of second layer code predictions generated by the second layer model based on the input feature vector, (ii) the plurality of second layer code predictions respectively corresponds to a second plurality of codes from the plurality of codes defined within the target coding domain, and (iii) the second plurality of codes is respectively associated with a plurality of second frequency metrics that achieve a second relative frequency threshold for the second layer model.

Example 5. The computer-implemented method of example 4, wherein (i) the first relative frequency threshold is lower than the second relative frequency threshold, and (ii) the second plurality of codes comprise the first plurality of codes and plurality of additional codes.

Example 6. The computer-implemented method of examples 4 or 5, wherein (i) the first layer metamodel is trained to generate the first intermediate code prediction by synthesizing the plurality of first layer code predictions, and (ii) the second layer metamodel is trained to generate the second intermediate code prediction by synthesizing the plurality of first layer code predictions, the plurality of second layer code predictions, and the first intermediate code prediction.

Example 7. The computer-implemented method of any of the preceding examples, wherein (i) the first layer model comprises a first layer model ensemble; (ii) the first layer code prediction for the code is one of a plurality of first layer code- specific predictions for the code is output by the first layer model ensemble based on the input feature vector, and (iii) the first layer metamodel is trained to generate the first intermediate code prediction by synthesizing the plurality of first layer code-specific predictions.

Example 8. The computer-implemented method of example 7, wherein the plurality of first layer code-specific predictions comprises a deterministic prediction and a probabilistic prediction.

Example 9. The computer-implemented method of any of the preceding examples, wherein the multi-layered machine learning model is trained by applying a staged training technique to the multi-layered machine learning model, wherein the staged training technique comprises individually training at least a portion of the first layer model; freezing one or more layer weights of the at least the portion of the first layer model; and individually training the first layer metamodel using a plurality of layer training outputs from the first layer model.

Example 10. The computer-implemented method of example 9, wherein the staged training technique further comprises freezing one or more meta weights of the first layer metamodel; and training the fusion model using the plurality of layer training outputs from the first layer model and a plurality of meta training outputs from the first layer metamodel.

Example 11. A system comprising memory and one or more processors communicatively coupled to the memory, the one or more processors configured to input an input feature vector to a first layer model of a multi-layered machine learning model to generate a first layer code prediction for a code of a plurality of codes defined within a target coding domain; input the first layer code prediction to a first layer metamodel of the multi-layered machine learning model to generate a first intermediate code prediction for the code; input the input feature vector to a second layer model of the multi-layered machine learning model to generate a second layer code prediction for the code; input (a) the first layer code prediction, (b) the second layer code prediction, and (c) the first intermediate code prediction to second layer metamodel of the multi-layered machine learning model to generate a second intermediate code prediction for the code; input a plurality of intermediate outputs comprising (a) the first intermediate code prediction, (b) the second intermediate code prediction, (c) a first code-level performance metric score identifying a first accuracy of the first layer model with respect to the code, and (d) a second code-level performance metric score identifying a second accuracy of the second layer model with respect to the code, to a fusion model of the multi-layered machine learning model to generate a fused code prediction for the code; and output a model prediction for the code based on the fused code prediction.

Example 12. The system of example 11, wherein the fused code prediction is based on modulating factor associated with a frequency metric corresponding to the code.

Example 13. The system of example 12, wherein (i) the first layer code prediction for the code is one of a plurality of first layer code predictions generated by the first layer model based on the input feature vector, (ii) the plurality of first layer code predictions respectively corresponds to a first plurality of codes from the plurality of codes defined within the target coding domain, and (iii) the first plurality of codes is respectively associated with a plurality of first frequency metrics that achieve a first relative frequency threshold for the first layer model.

Example 14. The system of example 13, wherein (i) the second layer code prediction for the code is one of a plurality of second layer code predictions generated by the second layer model based on the input feature vector, (ii) the plurality of second layer code predictions respectively corresponds to a second plurality of codes from the plurality of codes defined within the target coding domain, and (iii) the second plurality of codes is respectively associated with a plurality of second frequency metrics that achieve a second relative frequency threshold for the second layer model.

Example 15. The system of example 14, wherein (i) the first relative frequency threshold is lower than the second relative frequency threshold, and (ii) the second plurality of codes comprise the first plurality of codes and plurality of additional codes.

Example 16. The system of examples 14 or 15, wherein (i) the first layer metamodel is trained to generate the first intermediate code prediction by synthesizing the plurality of first layer code predictions, and (ii) the second layer metamodel is trained to generate the second intermediate code prediction by synthesizing the plurality of first layer code predictions, the plurality of second layer code predictions, and the first intermediate code prediction.

Example 17. The system of any of examples 11 through 16, wherein (i) the first layer model comprises a first layer model ensemble; (ii) the first layer code prediction for the code is one of a plurality of first layer code-specific predictions for the code is output by the first layer model ensemble based on the input feature vector, and (iii) the first layer metamodel is trained to generate the first intermediate code prediction by synthesizing the plurality of first layer code-specific predictions.

Example 18. The system of example 17, wherein the plurality of first layer code-specific predictions comprises a deterministic prediction and a probabilistic prediction.

Example 19. One or more non-transitory computer-readable storage media including instructions that, when executed by one or more processors, cause the one or more processors to input an input feature vector to a first layer model of a multi-layered machine learning model to generate a first layer code prediction for a code of a plurality of codes defined within a target coding domain; input the first layer code prediction to a first layer metamodel of the multi-layered machine learning model to generate a first intermediate code prediction for the code; input the input feature vector to a second layer model of the multi-layered machine learning model to generate a second layer code prediction for the code; input (a) the first layer code prediction, (b) the second layer code prediction, and (c) the first intermediate code prediction to second layer metamodel of the multi-layered machine learning model to generate a second intermediate code prediction for the code; input a plurality of intermediate outputs comprising (a) the first intermediate code prediction, (b) the second intermediate code prediction, (c) a first code-level performance metric score identifying a first accuracy of the first layer model with respect to the code, and (d) a second code-level performance metric score identifying a second accuracy of the second layer model with respect to the code, to a fusion model of the multi-layered machine learning model to generate a fused code prediction for the code; and output a model prediction for the code based on the fused code prediction.

Example 20. The one or more non-transitory computer-readable storage media of example 19, wherein the multi-layered machine learning model is trained by applying a staged training technique to the multi-layered machine learning model, wherein the staged training technique comprises individually training at least a portion of the first layer model; freezing one or more layer weights of the at least the portion of the first layer model; individually training the first layer metamodel using a plurality of layer training outputs from the first layer model; freezing one or more meta weights of the first layer metamodel; and training the fusion model using the plurality of layer training outputs from the first layer model and a plurality of meta training outputs from the first layer metamodel.

Example 21. The computer-implemented method of example 1, wherein the method further comprises training the multi-layered machine learning model.

Example 22. The computer-implemented method of example 21, wherein the training is performed by the one or more processors.

Example 23. The computer-implemented method of example 21, wherein the one or more processors are included in a first computing entity; and the training is performed by one or more other processors included in a second computing entity.

Example 24. The system of example 11, wherein the one or more processors are further configured to train the multi-layered machine learning model.

Example 25. The system of example 24, wherein the one or more processors are included in a first computing entity; and the multi-layered machine learning model are trained by one or more other processors included in a second computing entity.

Example 26. The one or more non-transitory computer-readable storage media of example 18, wherein the instructions further cause the one or more processors to train the multi-layered machine learning model.

Example 27. The one or more non-transitory computer-readable storage media of example 26, wherein the one or more processors are included in a first computing entity; and the multi-layered machine learning model are trained by one or more other processors included in a second computing entity.

**Claims**

1. A computer-implemented method comprising:

   inputting, by one or more processors, an input feature vector to a first layer model of a multi-layered machine learning model to generate a first layer code prediction for a code of a plurality of codes defined within a target coding domain;
   inputting, by the one or more processors, the first layer code prediction to a first layer metamodel of the multi-layered machine learning model to generate a first intermediate code prediction for the code;
   inputting, by the one or more processors, the input feature vector to a second layer model of the multi-layered machine learning model to generate a second layer code prediction for the code;
   inputting, by the one or more processors, (a) the first layer code prediction, (b) the second layer code prediction, and (c) the first intermediate code prediction to second layer metamodel of the multi-layered machine learning model to generate a second intermediate code prediction for the code;
   inputting, by the one or more processors, a plurality of intermediate outputs comprising (a) the first intermediate code prediction, (b) the second intermediate code prediction, (c) a first code-level performance metric score identifying a first accuracy of the first layer model with respect to the code, and (d) a second code-level performance metric score identifying a second accuracy of the second layer model with respect to the code, to a fusion model of the multi-layered machine learning model to generate a fused code prediction for the code; and
   outputting, by the one or more processors, a model prediction for the code based on the fused code prediction.

2. The computer-implemented method of claim 1, wherein the fused code prediction is based on modulating factor associated with a frequency metric corresponding to the code.

3. The computer-implemented method of claim 1, wherein:

   (i) the first layer code prediction for the code is one of a plurality of first layer code predictions generated by the first layer model based on the input feature vector,
   (ii) the plurality of first layer code predictions respectively corresponds to a first plurality of codes from the plurality of codes defined within the target coding domain, and
   (iii) the first plurality of codes is respectively associated with a plurality of first frequency metrics that achieve a first relative frequency threshold for the first layer model.

4. The computer-implemented method of claim 3, wherein:

(i) the second layer code prediction for the code is one of a plurality of second layer code predictions generated by the second layer model based on the input feature vector,
(ii) the plurality of second layer code predictions respectively corresponds to a second plurality of codes from the plurality of codes defined within the target coding domain, and
(iii) the second plurality of codes is respectively associated with a plurality of second frequency metrics that achieve a second relative frequency threshold for the second layer model.

5. The computer-implemented method of claim 4, wherein:

(i) the first relative frequency threshold is lower than the second relative frequency threshold, and
(ii) the second plurality of codes comprise the first plurality of codes and plurality of additional codes.

6. The computer-implemented method of claim 4, wherein:

(i) the first layer metamodel is trained to generate the first intermediate code prediction by synthesizing the plurality of first layer code predictions, and
(ii) the second layer metamodel is trained to generate the second intermediate code prediction by synthesizing the plurality of first layer code predictions, the plurality of second layer code predictions, and the first intermediate code prediction.

7. The computer-implemented method of claim 1, wherein:

(i) the first layer model comprises a first layer model ensemble;
(ii) the first layer code prediction for the code is one of a plurality of first layer code-specific predictions for the code is output by the first layer model ensemble based on the input feature vector, and
(iii) the first layer metamodel is trained to generate the first intermediate code prediction by synthesizing the plurality of first layer code-specific predictions.

8. The computer-implemented method of claim 7, wherein the plurality of first layer code-specific predictions comprises a deterministic prediction and a probabilistic prediction.

9. The computer-implemented method of claim 1, wherein the multi-layered machine learning model is trained by applying a staged training technique to the multi-layered machine learning model, wherein the staged training technique comprises:

individually training at least a portion of the first layer model;
freezing one or more layer weights of the at least the portion of the first layer model; and
individually training the first layer metamodel using a plurality of layer training outputs from the first layer model.

10. The computer-implemented method of claim 9, wherein the staged training technique further comprises:

freezing one or more meta weights of the first layer metamodel; and
training the fusion model using the plurality of layer training outputs from the first layer model and a plurality of meta training outputs from the first layer metamodel.

11. A system comprising memory and one or more processors communicatively coupled to the memory, the one or more processors configured to:

input an input feature vector to a first layer model of a multi-layered machine learning model to generate a first layer code prediction for a code of a plurality of codes defined within a target coding domain;
input the first layer code prediction to a first layer metamodel of the multi-layered machine learning model to generate a first intermediate code prediction for the code;
input the input feature vector to a second layer model of the multi-layered machine learning model to generate a second layer code prediction for the code;
input (a) the first layer code prediction, (b) the second layer code prediction, and (c) the first intermediate code prediction to second layer metamodel of the multi-layered machine learning model to generate a second intermediate code prediction for the code;
input a plurality of intermediate outputs comprising (a) the first intermediate code prediction, (b) the second intermediate code prediction, (c) a first code-level performance metric score identifying a first accuracy of the first layer model with respect to the code, and (d) a second code-level performance metric score identifying a second accuracy of the second layer model with respect to the code, to a fusion model of the multi-layered machine learning model to generate a fused code prediction for the code; and

output a model prediction for the code based on the fused code prediction.

12. The system of claim 11, wherein the fused code prediction is based on modulating factor associated with a frequency metric corresponding to the code.

13. The system of claim 12, wherein:

(i) the first layer code prediction for the code is one of a plurality of first layer code predictions generated by the first layer model based on the input feature vector,
(ii) the plurality of first layer code predictions respectively corresponds to a first plurality of codes from the plurality of codes defined within the target coding domain, and
(iii) the first plurality of codes is respectively associated with a plurality of first frequency metrics that achieve a first relative frequency threshold for the first layer model.

14. The system of claim 13, wherein:

(i) the second layer code prediction for the code is one of a plurality of second layer code predictions generated by the second layer model based on the input feature vector,
(ii) the plurality of second layer code predictions respectively corresponds to a second plurality of codes from the plurality of codes defined within the target coding domain, and
(iii) the second plurality of codes is respectively associated with a plurality of second frequency metrics that achieve a second relative frequency threshold for the second layer model.

15. One or more non-transitory computer-readable storage media including instructions that, when executed by one or more processors, cause the one or more processors to:

input an input feature vector to a first layer model of a multi-layered machine learning model to generate a first layer code prediction for a code of a plurality of codes defined within a target coding domain;
input the first layer code prediction to a first layer metamodel of the multi-layered machine learning model to generate a first intermediate code prediction for the code;
input the input feature vector to a second layer model of the multi-layered machine learning model to generate a second layer code prediction for the code;
input (a) the first layer code prediction, (b) the second layer code prediction, and (c) the first intermediate code prediction to second layer metamodel of the multi-layered machine learning model to generate a second intermediate code prediction for the code;
input a plurality of intermediate outputs comprising (a) the first intermediate code prediction, (b) the second intermediate code prediction, (c) a first code-level performance metric score identifying a first accuracy of the first layer model with respect to the code, and (d) a second code-level performance metric score identifying a second accuracy of the second layer model with respect to the code, to a fusion model of the multi-layered machine learning model to generate a fused code prediction for the code; and
output a model prediction for the code based on the fused code prediction.

100

CLIENT COMPUTING ENTITY 102

EXTERNAL COMPUTING ENTITY 108

PREDICTIVE COMPUTING ENTITY 106

COMPUTING SYSTEM 101

**FIG. 1**

200

PROCESSING
ELEMENT
205

VOLATILE
MEMORY
215

NON-
VOLATILE
MEMORY
210

NETWORK
INTERFACE
220

**FIG. 2**

102

312

304

306

PROCESSING ELEMENT
308

OUTPUT
DEVICE 316

INPUT DEVICE
318

NETWORK
INTERFACE 320

VOLATILE
MEMORY
322

NON-
VOLATILE
MEMORY
324

**FIG. 3**

MULTI-LAYERED MACHINE LEARNING MODEL 440

**FIG. 4**

EP 4 583 003 A1

500

| TARGET CODING DOMAIN 502 |
| METRIC ORDERED CODES 504 |

LAYER 1 CODE MODELS — 506

$M_1^1$
$M_2^1$
$M_i^1$

LAYER 2 CODE MODELS — 508

$M_1^2$
$M_2^2$
$M_j^2$

LAYER I CODE MODELS — 510

$M_1^i$
$M_1^i$
$M_j^i$

440

**FIG. 5**

FIG. 6

700

GENERATE INPUT FEATURE VECTORS FROM INPUT DATA OBJECT 702

GENERATE FIRST LAYER CODE PREDICTIONS 704

GENERATE FIRST INTERMEDIATE CODE PREDICTIONS 706

GENERATE SECOND LAYER CODE PREDICTIONS 708

GENERATE SECOND INTERMEDIATE CODE PREDICTIONS 710

GENERATE FUSED CODE PREDICTIONS 712

OUTPUT MODEL PREDICTION 714

**FIG. 7**

Europäisches
Patentamt

European
Patent Office

Office européen
des brevets

**EUROPEAN SEARCH REPORT**

**Application Number**

EP 24 21 8598

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LUTELLIER THIBAUD TLUTELLI@UWATERLOO CA ET AL: "CoCoNuT: combining context-aware neural translation models using ensemble for program repair", PROCEEDINGS OF THE 29TH ACM SIGSOFT INTERNATIONAL SYMPOSIUM ON SOFTWARE TESTING AND ANALYSIS, ACMPUB27, NEW YORK, NY, USA, 18 July 2020 (2020-07-18), pages 101-114, XP058454620, DOI: 10.1145/3395363.3397369 ISBN: 978-1-4503-8008-9 * abstract; figures 2, 3 * * page 103, column 2, paragraph 2 – page 105 * | 1-15 | INV. G06N3/045 G06N20/20 G06F8/30  ADD. G06N3/088 |
| | ----- | | |
| X | US 2023/351109 A1 (ROY SUMAN [IN] ET AL) 2 November 2023 (2023-11-02) * claims 1-3, 7-8, 14; figure 4 * | 1-15 | |
| | ----- | | |
| A | GAO SHUZHENG ET AL: "Code Structure-Guided Transformer for Source Code Summarization", ACM TRANSACTIONS ON SOFTWARE ENGINEERING AND METHODOLOGY, ASSOCIATION FOR COMPUTING MACHINERY, NEW YORK, US, vol. 32, no. 1, 13 February 2023 (2023-02-13), pages 1-32, XP058984476, ISSN: 1049-331X, DOI: 10.1145/3522674 * figures 3, 4 * | 1-15 | **TECHNICAL FIELDS SEARCHED (IPC)**  G06N G06F |
| | ----- | | |
| | -/-- | | |

The present search report has been drawn up for all claims

| Place of search | Date of completion of the search | Examiner |
|---|---|---|
| The Hague | 14 April 2025 | Tidriri, Khaoula |

EPO FORM 1503 03.82 (P04C01)

page 1 of 2

Europäisches
Patentamt

European
Patent Office

Office européen
des brevets

## EUROPEAN SEARCH REPORT

**Application Number**

EP 24 21 8598

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | AHMED AREEG ET AL: "Source-Code Generation Using Deep Learning: A Survey", 15 December 2023 (2023-12-15), PROGRESS IN ARTIFICIAL INTELLIGENCE; [LECTURE NOTES IN COMPUTER SCIENCE; LECT.NOTES COMPUTER], SPRINGER NATURE SWITZERLAND, CHAM, PAGE(S) 467 - 482, XP047678240, ISSN: 0302-9743 ISBN: 978-3-031-49010-1 [retrieved on 2023-12-15] * the whole document * | 1-15 | |

TECHNICAL FIELDS
SEARCHED (IPC)

The present search report has been drawn up for all claims

| Place of search | Date of completion of the search | Examiner |
|---|---|---|
| The Hague | 14 April 2025 | Tidriri, Khaoula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 8598

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2025

| Patent document cited in search report | Publication date | Patent family member(s) | Publication date |
|---|---|---|---|
| US 2023351109 A1 | 02-11-2023 | NONE | |

EPO FORM P0459